(19) Europäisches Patentamt
European Patent Office
Office européen des brevets

(11) Publication number: **0 263 704 B1**

(12) # EUROPEAN PATENT SPECIFICATION

(45) Date of publication of patent specification: **12.06.91**

(51) Int. Cl.5: **C10M 159/12**, C10M 133/52, C10L 1/22, C08G 63/91

(21) Application number: **87308907.2**

(22) Date of filing: **07.10.87**

(54) **Lactone modified, aminated dispersant additives useful in oleaginous compositions.**

(30) Priority: **07.10.86 US 916218**

(43) Date of publication of application:
**13.04.88 Bulletin 88/15**

(45) Publication of the grant of the patent:
**12.06.91 Bulletin 91/24**

(84) Designated Contracting States:
**BE DE FR GB**

(56) References cited:
**EP-A- 0 113 582**
**GB-A- 1 054 370**
**US-A- 4 234 435**
**WO-A-85/03504**
**US-A- 3 169 945**
**US-A- 4 614 603**

(73) Proprietor: **EXXON CHEMICAL PATENTS INC.**
**1900 East Linden Avenue**
**Linden New Jersey 07036(US)**

(72) Inventor: **Lundberg, Robert Dean**
**4 Brian Drive**
**Bridgewater New Jersey 08807(US)**
Inventor: **Gutierrez, Antonio**
**22 Tar Heels Road**
**Mercerville New Jersey 08619(US)**

(74) Representative: **Northover, Robert Frank et al**
**Exxon Chemical Limited Exxon Chemical**
**Technology Centre PO Box 1**
**Abingdon Oxfordshire, OX13 6BB(GB)**

**EP 0 263 704 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to oil soluble dispersant additives useful in fuel and lubricating oil compositions, including concentrates containing said additives, and methods for their manufacture and use. The dispersant additives are poly ($C_5$-$C_9$ lactone) adducts of aminated neutralized dicarboxylic acids, anhydrides, esters, etc., which have been substituted with a high molecular weight hydrocarbon group and then reacted with a polyamine, and with a $C_5$-$C_9$ lactone. The high molecular weight hydrocarbon group has a number average molecular weight ($M_n$) of about 300 to about 10,000, and preferably about 700 to about 5,000. The additives will have a ratio (functionality) of about 0.70 to about 2.0 dicarboxylic acid producing moieties for each equivalent weight of the high molecular weight hydrocarbon therein.

PRIOR ART

It is known that polymers of 6 to 10 membered lactones such as valerolactone or epsilon-caprolactone, hereinafter E-caprolactone, can be prepared by reacting the lactone monomer with a hydroxyl or amine initiator. When reacting E-caprolactone, for example, the polymerization reaction may be illustrated by the following equations:

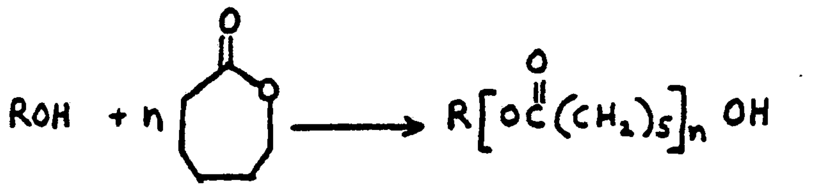

Eq. 1

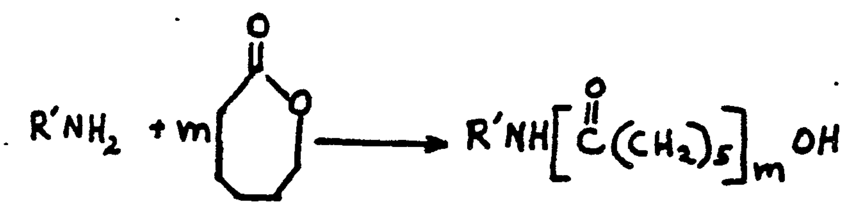

Eq. 2

The reactions are known to be catalyzed by various esterification catalysts such as stannous octanoate, and a variety of different molecular weight products are feasible depending upon the ratio of lactone to initiator. Molecular weights on the order of from a few hundred up to about 5,000 are reproducably achievable.

Caprolactone can also be polymerized to a very high molecular weight, e.g., on the order of 100,000 or more. Typically such high molecular weight polymers do not employ initiators and preservation of functionality is not a requirement.

It is also known to react a lactone such as E-caprolactone with a diamine wherein one of the diamine groups is a tertiary amine and the other amine group is a primary or secondary amine to form a polycaprolactone polymer having a tertiary amine group at one end and a primary hydroxyl group at the other end. The polycaprolactone polymer would be used to neutralize polymeric acids.

It has now been found that oil soluble dispersant additives, useful in fuel and lubricating oil compositions, including concentrates containing the additives, can be prepared by polymerizing a 6 to 10 membered lactone using as the initiator those lactone-reactive functions contained within a known class of oil soluble dispersants, namely: dicarboxylic acids, anhydrides, esters, etc. that have been substituted with a high molecular weight hydrocarbon group. Typical examples of one such initiator are polyalkylene succinimides wherein the polyalkylene moiety has a number average molecular weight of about 700 to about 5,000 and wherein the ratio (functionality) of succinic acid producing moieties to each equivalent weight of the polyalkylene moiety is from about 0.70 to about 2.0.

While there are a number of prior art disclosures relating to polyalkenyl succinimide-type dispersants and to lactone polymerization reactions, in general, little or no prior art of direct pertinence appears to have surfaced in regard to the present dispersants. Exemplary of the patent literature which relates to lactone polymerization processes and/or to oil soluble dispersant additives are the following U.S. Patents: U.S.

4,362,635 discloses synthetic ester oils which are esterification products of monoalcohols and dicarboxylic acids or of polyhydric alcohols and monocarboxylic acids respectively, containing 5 to 45% by weight of units of hydroxycarboxylic acids obtained from aliphatic alcohols, aliphatic, cycloaliphatic or aromatic carboxylic acids, and lactones of aliphatic $C_5$-$C_{12}$ hydroxycarboxylic acids. The synthetic ester oils are suitable for the preparation of lubricants and lubricant compositions.

U.S. Patent 3,202,678 discloses as oil additives, N-polyamine substituted alkenyl succinimides, wherein the alkenyl radical is obtained by polymerization a $C_2$-$C_5$ olefin to form a hydrocarbon having a molecular weight ranging from about 400 to about 3000. The number of dicarboxylic acid producing moieties per hydrocarbon radical in the succinimides is not disclosed, but the mole ratio of polyolefin to maleic anhydride used to obtain the alkenyl succinimides is from 1:1 to 1:10.

U.S. Patent 3,219,666 discloses as dispersing agents in lubricants, derivatives of polyalkenyl succinic acids and nitrogen compounds, including polyamines. The preferred molecular weight of the polyalkenyl moieties is 750-5,000.

U.S. Patent 4,234,435 discloses as oil additives, polyalkylene substituted dicarboxylic acids derived from polyalkylenes having a $M_n$ of 1300 to 5,000 and containing at least 1.3 dicarboxylic acid groups per polyalkylene. In Example 34 of that patent, a polyisobutene-substituted succinic acylating agent is reacted with caprolactam in the presence of mineral oil and sodium hydroxide.

U.S. Patent 3,381,022 relates to ester derivatives of substantially saturated polymerized olefin-substituted succinic acid wherein the polymerized olefin substituent contains at least about 50 aliphatic carbon atoms and has a molecular weight of about 700 to 5000. The esters include the acidic esters, diesters, and metal salt esters wherein the ester moiety is derived from monohydric and polyhydric alcohols, phenols and naphthols. The ester derivatives are disclosed to be useful as additives in lubricating compositions, fuels, hydrocarbon oils and power transmission fluids. A related application, i.e., U.S. Patent No. 3,522,179, relates to lubricating compositions comprising a major amount of a lubricating oil and a minor proportion of an ester derivative of a hydrocarbon-substituted succinic acid sufficient to improve the detergency of the lubricating composition. The ester derivatives are similar to those described in U.S. Patent 3,381,022 and contain at least about 50 aliphatic carbon atoms. The hydrocarbon substituent may be derived from a polymerized lower monoolefin having a molecular weight of from about 700 to about 5,000.

U.S. Patent 4,502,970 discloses lubricating oil compositions useful in both gasoline engines and diesel engines. The compositions contain a polyisobutenyl succinicimide as a supplemental dispersant-detergent in combination with another conventional dispersant. The polyisobutenyl group has a $M_n$ of about 700-5,000.

U.S. Patent 4,379,914 and its continuation-in-part (U.S. Patent 4,463,168) disclose the preparation of polycaprolactone polymers by reacting E-caprolactone with a diamine wherein one of the amine groups of the diamine is a tertiary amine and the other is a primary or secondary amine. The polycaprolactone polymers are disclosed as being useful for neutralizing certain sulfonic acid-containing polymers to form amine-neutralized sulfonated derivatives.

U.S. Patent 3,169,945 discloses the preparation of lactone polyesters which are useful as plasticizers and as intermediates for preparing elastomers and foams. The polyesters can be prepared by reacting a lactone such as E-caprolactone with an initiator such as an alcohol, amine or amino alcohol.

U.S. Patent 4,532,058 discloses as a motor oil dispersant, a spirolactone condensation product formed by heating alkenyl succinic anhydrides in the presence of a basic catalyst, and then heating the resulting bicyclic spirodilactone condensation product with a polyamine or polyamine alcohol. It should be emphasized that this patent describes the intermolecular decarboxylation of an alkenyl succinic anhydride at elevated temperatures to form a condensation product and carbon dioxide as a by-product. This prior art is not concerned with polymerizable lactones which are the subject of the instant invention.

U.S. Patent 4,113,639 and 4,116,876 disclose an example of alkenyl succinic anhydride having a molecular weight of the alkenyl group of 1,300 and a Saponification Number of 103 (about 1.3 succinic anhydride units per hydrocarbon molecule). This alkenyl succinic anhydride may be reacted with polyamine and then boric acid (U.S. 4,113,639), or may be reacted with an amino alcohol to form an oxazoline (4,116,876) which is then borated by reaction with boric acid.

U.S. Patent 4,062,786 in Example 13 shows a polyisobutenylsuccinic anhydride of molecular weight of about 1300 and a Saponification Number of about 100 (about 1.25 succinic anhydride units per alkenyl group).

U.S. Patent 4,123,373 in Example 3 shows a polyisobutenylsuccinic anhydride of about 1,400 molecular weight having a Saponification Number of 80 (about 1.07 succinic anhydride units per polyisobutylene units).

## SUMMARY OF THE INVENTION

It is a principal object of this invention to provide a novel class of poly ($C_5$-$C_9$ lactone) adduct dispersants.

Another object is to provide a process for preparing a novel class of dispersants from $C_5$-$C_9$ lactones and hydrocarbyl substituted dicarboxylic acids, anhydrides, esters, etc. which contain lactone-reactive amine functionality.

A further object is to provided lubricant compositions and concentrates containing the novel poly ($C_5$-$C_9$ lactone) adducts of this invention.

Yet another object is to provide a novel class of oil soluble dispersants from polyalkylene substituted acylating agents which have at least one lactone-reactive amino group in their structure.

Still another object is to provide poly ($C_5$-$C_9$ lactone) adducts from derivatives of polyalkylene substituted succinic acylating agents which contain at least one lactone-reactive amino group, as well as lubricant compositions and concentrates containing such adducts.

Still another object is to provide metal complexes and other post-treated derivatives, e.g., borated derivatives, of the novel poly($C_5$-$C_9$ lactone) adducts of this invention, as well as lubricant compositions and concentrates containing such post-treated derivatives.

The manner in which these and other objects can be achieved will be apparent from the detailed description of the invention which appears hereinbelow.

In one aspect of this invention, one or more of the above objects can be achieved by initiating the polymerization of a $C_5$-$C_9$ lactone by means of an amino function contained in a polyolefin substituted dicarboxylic acylating agent, wherein the polyolefin has a number average molecular weight of about 300 to about 10,000, wherein the acylating agent has been neutralized with a polyfunctional amine, and wherein the polyolefin substituted, neutralized acylating agent contains from about 0.70 to about 2.0 dicarboxylic acid producing moieties, preferably acid anhydride moieties, per equivalent weight of polyolefin.

In another aspect, one or more of the objects of this invention can be achieved by heating a $C_5$-$C_9$ lactone such as E-caprolactone at a temperature of at least about 80° C, and preferably from about 90° C, to about 180° C with a polyalkylene succinimide initator wherein the polyalkylene is characterized by a number average molecular weight of about 300-10,000 and wherein the initator is characterized by the presence within its structure of from about 0.70 to about 2.0 succinic acid or succinic acid derivative moieties for each equivalent weight of polyalkylene; and, in a further aspect, one or more objects of this invention are achieved by providing poly ($C_5$-$C_9$ lactone) adducts produced by such a process.

One or more additional objects of this invention are achieved by reacting E-caprolactone with a polyalkylene succinic acylating agent which has been post-treated to introduce into the structure thereof at least one lactone-reactive amino group; one or more additional objects are accomplished by providing poly (E-caprolactone) adducts produced by such a process.

One or more objects of this invention can be illustrated in connection with the reaction between E-caprolactone and a polyisobutenyl succinimide initiator having available primary amine functionality as follows:

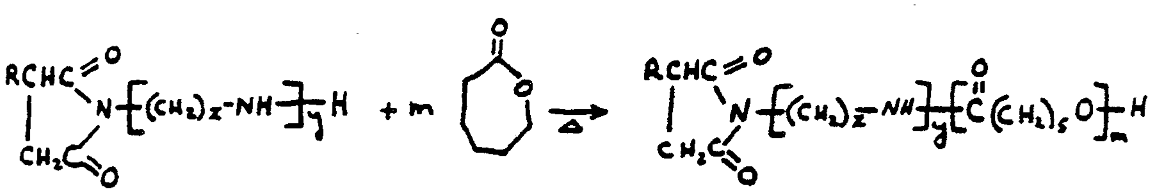

Eq. 3

where x is a number from 1 to 4, y is a number from 1 to 7, m has an average value of about 0.2 to about 100, preferably from 1 to about 20, most preferably from 1 to about 5, R represents polyisobutylene having a number average molecular weight of from about 700 to about 5,000, and the ratio (functionality) of succinic acid producing moieties is from about 0.70 to about 2.0 per equivalent weight of polyisobutylene. The above polymerization can be conducted with or without a catalyst. However, it is generally preferred to employ a catalyst such as stannous octanoate in an amount of from about 100 to about 10,000 parts by weight of catalyst per one million parts by weight of total reaction mixture.

One or more additional objects can be illustrated in connection with the reaction between E-caprolactone and a polyalkylene succinimide initiator having secondary amine functionality, such as a polyisobutenyl bis-succinimide, as follows:

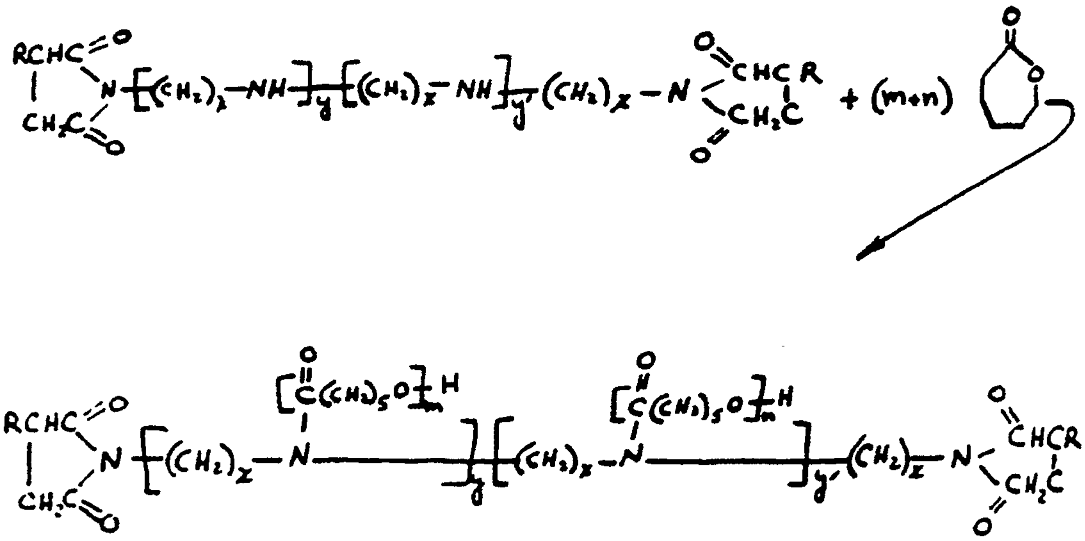

Eq. 4

where x is a number from 1 to 4, y and y', independently, are numbers from 1 to 7, and m and n, independently, have a value of zero to about 100, preferably from 1 to about 20, most preferably from 1 to about 5, provided however that both m and n can not be zero, R represents polyisobutylene having a number average molecular weight of from about 700 to about 5,000, and the functionality of succinic acid producing moieties is from about 0.7 to about 2.0 per equivalent weight of polyisobutylene.

The novel poly ($C_5$-$C_9$ lactone) adducts of this invention are useful per se as an additive, e.g. a dispersant additive, for example in the same manner as disclosed in U.S. Patent 3,219,666 where prior art derivatives of polyalkenyl succinic acids and nitrogen compounds are used as dispersant/detergents in lubricants, especially lubricants intended for use in the crankcase of internal combustion engines, gears, and power transmitting units. Accordingly, one or more objects of the invention are achieved by providing lubricating oil compositions, e.g. automatic transmission fluids, heavy duty oils suitable for use in the crankcases of gasoline and diesel engines, etc. containing the novel poly ($C_5$-$C_9$ lactone) adducts of this invention. Such lubricating oil compositions may contain additional additives such as viscosity index improvers, antioxidants, corrosion inhibitors, detergents, pour point depressants, antiwear agents, etc.

Still further objects are achieved by providing concentrate compositions comprising from about 20 to about 80 wt. % of a normally liquid, substantially inert, organic solvent/diluent, e.g. mineral lubricating oil, or other suitable solvent/diluent and from about 20 to about 80 wt. % of a poly ($C_5$-$C_9$ lactone) adduct, as mentioned above and described in more detail hereinafter.

## DESCRIPTION OF THE PREFERRED EMBODIMENTS

## THE HYDROCARBYL DICARBOXYLIC ACID MATERIAL

The long chain hydrocarbyl substituted dicarboxylic acid material, i.e. acid or anhydride, or ester, used in the invention includes a long chain hydrocarbon, generally a polyolefin, substituted with 0.7 to 2.0, preferably 1.00 to 1.5, e.g. 1.05 to 1.3 moles, per mole of polyolefin of an alpha or beta unsaturated $C_4$ to $C_{10}$ dicarboxylic acid, or anhydride or ester thereof, such as fumaric acid, itaconic acid, maleic acid, maleic anhydride, chloromaleic acid, dimethyl fumarate, chloromaleic anhydride, etc.

Preferred olefin polymers for reaction with the unsaturated dicarboxylic acids are polymers comprising a major molar amount of $C_2$ to $C_{10}$, e.g. $C_2$ to $C_5$ monoolefin. Such olefins include ethylene, propylene, butylene, pentene, octene-1, styrene, etc. The polymers can be homopolymers such as polyisobutylene, as well as copolymers of two or more of such olefins such as copolymers of: ethylene and propylene; butylene and isobutylene; propylene and isobutylene; etc. Other copolymers include those in which a minor molar amount of the copolymer monomers, e.g., a copolymer of isobutylene and butadiene; or a copolymer of

ethylene, propylene and 1,4-hexadiene; etc.

In some cases, the olefin polymer may be completely saturated, for example an ethylene-propylene copolymer made by a Ziegler-Natta synthesis using hydrogen as a moderator to control molecular weight.

The olefin polymers will usually have a number average molecular weight ($M_n$) within the range of about 700 and about 5,000, more usually between about 700 to about 3,000. Particularly useful olefin polymers have a number average molecular weight within the range of about 900 and about 2,500 with approximately one terminal double bond per polymer chain. An especially useful starting material for a highly potent dispersant additive made in accordance with this invention is polyisobutylene. The number average molecular weight for such polymers can be determined by several known techniques. A convenient method for such determination is by gel permeation chromatography (GPC) which additionally provides molecular weight distribution information, see W. W. Yau, J. J. Kirkland and D. D. Bly, "Modern Size Exclusion Liquid Chromatography", John Wiley and Sons, New York, 1979.

Processes for reacting the olefin polymer with the $C_4$ - $C_{10}$ unsaturated dicarboxylic acid, anhydride or ester are known in the art. For example, the olefin polymer and the dicarboxylic acid material may be simply heated together as disclosed in U.S. Patents 3,361,673 and 3,401,118 to cause a thermal "ene" reaction to take place; or, the olefin polymer can be first halogenated, for example, chlorinated or brominated to about 1 to 8, preferably 3 to 7 wt. % chlorine or bromine, based on the weight of polymer, by passing the chlorine or bromine through the polyolefin at a temperature of 100 to 250°C, e.g. 140 to 225°C. for about 0.5 to 10 preferably 1 to 7 hours. The halogenated polymer may then be reacted with sufficient unsaturated acid or anhydride at 100 to 250°C, usually about 140 to 180°C. for about 0.5 to 10, e.g. 3 to 8 hours, so the product obtained will contain about 1.0 to 1.5, preferably 1.06 to 1.20, e.g. 1.10 moles of the unsaturated acid per mole of the halogenated polymer. Processes of this general type are taught in U.S. Patents 3,087,436; 3,172,892; 3,272,746.

Alternatively, the olefin polymer, and the unsaturated acid material are mixed and heated while adding chlorine to the hot material. Processes of this type are disclosed in U.S. Patents 3,215,707; 3,231,587, 3,912,764; 4,110,349; 4,234,435; and in U.K. 1,440,219.

By the use of halogen, about 65 to 95 wt. % of the polyolefin, e.g. polyisobutylene will normally react with the dicarboxylic acid material. Upon carrying out a thermal reaction without the use of halogen or a catalyst, then usually only about 50 to 75 wt. % of the polyisobutylene will react. Chlorination helps increase the reactivity. For convenience, the aforesaid functionality ratios of dicarboxylic acid producing units to polyolefin of 0.70 to 2.0, 1.00 to 1.5 and 1.05 to 1.3 are based upon the total amount of polyolefin, that is the total of both the reacted and unreacted polyolefin, used to make the product.

AMINE NEUTRALIZATION OF THE HYDROCARBYL DICARBOXYLIC ACID MATERIAL

In order to form the poly ($C_5$-$C_9$ lactone) adduct dispersants of the present invention, the hydrocarbyl dicarboxylic material must be neutralized with a polyfunctional amine. This will result in the formation of an imide or amide linkage, or a mixture of imide and amide linkages, in the hydrocarbyl dicarboxylic material and will add a lactone-reactive amino group thereto. The lactone-reactive amino group will initiate the subsequent lactone polymerization to provide the novel dispersants of this invention.

Useful amine compounds for neutralization of the hydrocarbyl substituted dicarboxylic acid material include polyamines of about 2 to 60, e.g. 3 to 20, most preferably 3 to 10, total carbon atoms in the molecule. These amines may be hydrocarbyl amines or may be hydrocarbyl amines including other non-interfering groups, e.g., alkoxy groups, amide groups, nitrile groups, imidazoline groups, and the like. Preferred amines are aliphatic saturated amines, including those of the general formula:

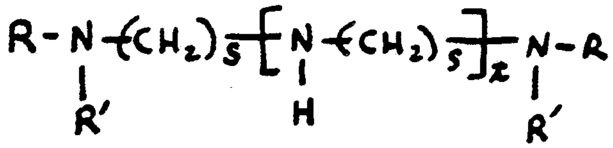

I

wherein R and R' are independently selected from the group consisting of hydrogen; $C_1$ to $C_{25}$ straight or branched chain alkyl radicals; $C_1$ to $C_{12}$ alkoxy $C_2$ to $C_6$ alkylene radicals; and $C_1$ to $C_{12}$ alkylamino $C_2$ to $C_6$ alkylene radicals; each s is the same or a different number of from 2 to 6, preferably 2 to 4; and to is a number of from 0 to 10, preferably 2 to 7. If t=0, then at least one of R or R'; must be H such that there are

at least two of either primary or secondary amino groups.

Non-limiting examples of suitable amine compounds include: 1,2-diaminoethane; 1,3-diaminopropane; 1,4-diaminobutane; 1,6-diaminohexane; polyethylene amines such as diethylene triamine; triethylene tetramine; tetraethylene pentamine; polypropylene amines such as 1,2-propylene diamine; di-(1,2-propylene) triamine; di-(1,3-propylene) triamine; N,N-dimethyl-1,3-diaminopropane; N,N-di-(2-aminoethyl) ethylene diamine; N-dodecyl-1,3-propane diamine; di-,and tri-tallow amines; amino morpholines such as N-(3-aminoproply) morpholine; etc.

Other useful amine compounds include: alicyclic diamines such as 1,4-di(aminomethyl) cyclohexane, and heterocyclic compounds such as morpholines, imidazolines, and N-aminolakyl piperazines of the general formula:

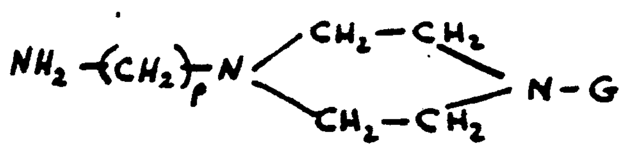 II

wherein G is independently selected from the group consisting of hydrogen and omega-(non-tertiary)-aminoalkylene radicals of from 1 to 3 carbon atoms, and p is a number of from 1 to 4. Non-limiting examples of such amines include 2-pentadecyl imidazoline; N-(2-aminoethyl) piperazine; etc.

Commercial mixtures of amine compounds advantageously may be used. For example, one process for preparing alkylene amines involves the reaction of an alkylene dihalide (such as ethylene dichloride or propylene dichloride ) with ammonia, which results in a complex mixture of alkylene amines wherein pairs of nitrogens are joined by alkylene groups, forming such compounds as diethylene triamine, triethylenetetramine, tetraethylene pentamine and isomeric piperazines. A low cost mixture of poly-(ethyleneamines) compounds averaging about 5 to 7 nitrogen atoms per molecule are available commercially under trade names such as "Polyamine H", "Polyamine 400", "Dow Polyamine E-100", etc.

Useful amines also include polyoxalkylene polyamines such as those of the formulas:

$$NH_2-\text{alkylene}-(\text{O-alkylene})_m-NH_2 \qquad \text{III}$$

where m has a value of about 3 to 70 and preferably 10 to 35; and

$$R-[\text{alkylene}-(\text{O-alkylene})_n\, NH_2]_a \qquad \text{IV}$$

where n has value of about 1 to 40 with the proviso that the sum of all the n's is from about 3 to about 70 and preferably from about 6 to about 35, R is a substituted saturated hydrocarbon radical of up to 10 carbon atoms, wherein the number of substituents on the R group is represented by the value of "a", which is a number from 3 to 6. The alkylene groups in either formula III or IV may be straight or branched chain containing about 2 to 7, and preferably about 2 to 4 carbon atoms.

The above polyoxyalkylene polyamines, preferably polyoxyalkylene diamines and polyoxyalkylene triamines, may have average molecular weights ranging from about 200 to about 4,000 and preferably from about 400 to about 2,000. The preferred polyoxyalkylene polyamines include the polyoxyethylene and polyoxypropylene diamines and the polyoxypropylene triamines having average molecular weight ranging from about 200 to 2,000. The polyoxyalkylene polyamines are commerically available and may be obtained, for example, from the Jefferson Chemical Company, Inc. under the trade name "Jeffamines D-230, D-400, D-1000, D-2000, T-403", etc.

The amine is readily reacted with the hydrocarbyl dicarboxylic acid material, e.g. alkenyl succinic anhydride, by heating an oil solution containing 5 to 95 wt. % of dicarboxylic acid material to about 100 to 250 ° C., preferably 125 to 175 ° C., generally for 1 to 10, e.g. 2 to 6 hours until the desired amount of water is removed. The heating is preferably carried out to favor formation of imides or mixtures of imides and

amides, rather than amides and salts.

While the amine may used in any amount effective to neutralize the hydrocarbyl dicarboxylic material, generally from about 0.5 to about 3.33, preferably about 0.75 to 2.5, e.g. 1.0 to 2.0 moles of dicarboxylic acid moiety, e.g. grafted maleic anhydride are used, per mole of the amine, e.g. bi-primary amine content. For example, for one mole of olefin reacted with sufficient maleic anhydride to add 1.0 mole of maleic anhydride groups per mole of olefin, when converted to a mixture of amides and imides, about 0.5 moles of amine with two primary groups preferably would be used; i.e. 2.0 moles of dicarboxylic acid moiety per mole of amine.

Still other useful amines are those which can be reacted, in a cyclodehydration reaction, with the hydrocarbyl substituted monounsaturated dicarboxylic acid producing material, such as polyisobutenyl succinic anhydride, to form what can be referred to as a macrocyclic or polycyclic polyamine compound. These amines, may be generalized by the formula

$NH_2$-Z-$NH_2$   V

where Z may be -$CH_2CH_2CH_2$-; -$(CH_2CH_2CH_2NH)_nCH_2CH_2CH_2$-, where n is 1-6; or $(CH_2CH_2CH_2NH)_mCH_2$-$(CH_2)_p(NH$-$CH_2CH_2CH_2)_{m'}$-, where m and m' are each at least 1 and m + m' is 2-5, and p is 1-4. Further amines include polyamino propyl amines having C-substituents such as $C_{12}$-$C_{20}$ alkyl, $C_6$-$C_{10}$ aryl, hydroxyl, thiol, cyano, ethoxy, polyoxyethylene and polyoxypropylene having a degree of polymerization of 2-10 and other compatible non-reactive functional groups, but N-substituted polyamines are not suitable reactants in preparing the macrocyclic compounds in a cyclodehydration reaction, i.e. the nitrogen atoms must be either -NH or -$NH_2$. Preferably Z is -$CH_2CH_2CH_2$-; -$(CH_2CH_2CH_2NH)_nCH_2CH_2CH_2$-, where n is 1-3 or -$(CH_2CH_2CH_2NH)_m(CH_2CH_2)(NHCH_2CH_2CH_2)_{m'}$- where m and m' are as described above.

Formulation of the macrocyclic and polycyclic polyamine compounds proceeds by aminolysis of the hydrocarbyl substituted succinic anhydride, monocarboxylic acid or polycarboxylic acid using an inverse mode addition. Such a process will avoid the formation of non-cyclic, imide products or other products resulting from chain extension. The first step of the synthesis is to slowly add the succinic anhydride or mono- or polycarboxylic acid to the polyamine compound at relatively low temperatures, such as room temperature, that is, about 20° C., up to about 100° C. in an inert hydrocarbon solvent, such as xylene, toluene, dichlorobenzene or a neutral paraffinic mineral oil. This inverse mode of addition is critical to form the 1:1 amic acid or amine carboxylate salt intermediate and inhibit or prevent formation of imide or bis-imide non-cyclic final products. The reaction temperature during this inverse addition of hydrocarbon succinic anhydride or carboxylic acid should be as low as possible, preferably below 100° C., and the optimum temperature will vary somewhat depending on the reactivity and structure of the anhydride compound. The first phase is believed to be the formation of an intermediate and the temperature and rate of additon should be merely sufficient to promote this reaction. Thus at the beginning of the reaction a molar excess of amine relative to moles of succinic anhydride or carboxylic acid groups present is used to minimize any chain extension or bis-imide formation. The formation of an intermediate 1:1 amic acid salt is indicated by the disappearance of carbonyl bands in the infrared spectrum of the anhydride reactant. The formation of the amine carboxylate intermediate is indicated by the appearance of a carbonyl based on the infrared spectrum of the product due to carboxylate formation.

The second step of the process, the cyclodehydration of the amic acid or amine carboxylate intermediate is effected at a temperature consistent with the reactivity of the intermediate salt, with suitable cyclodehydration temperatures ranging from 130° C.-250° C., preferably about 140° C. to 175° C. Formation of the macrocyclic polyamine structure is indicated by cessation of evolution of water and by the maximizaton of the C=N absorption band at about the 6 micron range in the infrared spectrum of the reaction product.

It is critical to the cyclodehydraton process that this inverse mode of addition be used to effect the aminolysis of the succinic anhydride or carboxylic acid. Thus the slow addition of hydrocarbon succinic anhydride or carboxylic acid to the well stirred polyamine, preferably in solution, maintained at about 20 to 100° C. maximizes the formation of the 1:1 intermediate salt which upon further heating at 130° C. - 250° C. undergoes cyclodehydration to the desired macrobicyclic polyamine product.

A preferred technique for preparing the macrocyclic and polycyclic compounds comprises the additional step of heat soaking the reaction mixture subsequent to the addition of the hydrocarbyl substituted succinic anhydride, mono- or polycarboxylic acid by maintaining the reaction mixture at a temperature of 80° to 130° C. for 1 to 3 hours and prior to increasing the temperature to effect the cyclodehydration reaction. After the conclusion of the heat soak period, the temperature of the reaction mixture is increased to the cyclodehydration range of 130° to 250° C. but at least 20° C. higher than the temperature employed

during the heat soaking step.

LACTONE POLYMER CAPPING OF THE AMINE NEUTRALIZED HYDROCARBYL SUBSTITUTED DICARBOXYLIC MATERIAL

In an aspect of invention, the novel poly ($C_5$-$C_9$ lactone) adducts are prepared by polymerizing the lactone using at least one residual amine functionality on the neuralized hydrocarbyl substituted dicarboxylic acid material as the ring opening and polymerization initiator.

Useful lactone compounds for this process include polymerizable lactones having at least five carbon atoms in the lactone ring, e.g. 5 to 9 carbon atoms. The lactones may be substituted or unsubstituted and the subtituents, if any, may comprise, for example, $C_1$ to $C_{25}$ straight or branched chain alkyl; aryl, aralkyl, or cycloalkyl having 6 to 60 total carbon atoms; $C_1$ to $C_{12}$ alkoxy or other groups which would not interfere with the ring opening reaction and adduct formation. The preferred lactones have no more than two substituent groups, and the more preferred lactones are unsubstituted.

Non-limiting examples of the useful lactone include delta-valerolactone, methyl-delta-valerolactone, E-caprolactone, methyl-E-caprolactone, dimethyl-E-caprolactone, methoxy-E-caprolactone, cyclohexyl-E-caprolactone, methylbenzyl-E-caprolactone, caprylolactone, methyl-caprylolactone, and the like, with E-caprolactone being particularly preferred.

The ring opening polymerization of the lactone by reaction with the neutralized hydrocarbyl substituted dicarboxylic acid material may be carried out, with or without a catalyst, simply by heating a mixture of the lactone and dicarboxylic acid material in a reaction vessel in the absence of a solvent at a temperature of from about 30° C. to about 200° C., more preferrably at a temperature of about 75° C. to about 180° C., and most preferably about 90° to about 160° C., for a sufficient period of time to effect polymerization. Optionally, a solvent for the monomer and/or polymer can be employed to control viscosity and/or reaction rates.

In one preferred embodiment of the invention, the $C_5$-$C_9$ lactone is reacted with a polyisobutenyl succinimide which has been prepared by neutralizing polyisobutenyl succinic acid with an aliphatic diamine as outlined above. This reaction can be depicted generally by the following equation when the succinimide has available primary amino functionality:

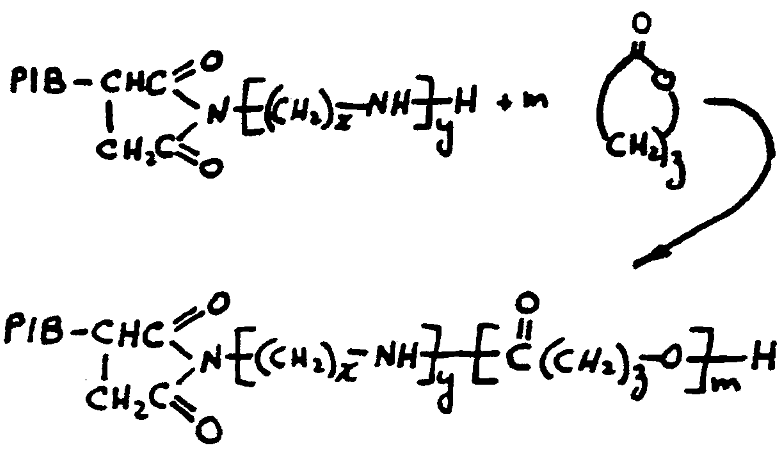

Eq. 5

where x is a number from 1 to 4, y is a number from 1 to 10, preferably 3 to 7, m has an average value of from about 0.2 to about 100, preferably from 1 to about 20, z is from 4 to 8, PIB represents polyisobutylene having a number average molecular weight of from about 700 to about 5,000, preferably about 900 to about 3,000, and the ratio-(functionality) of succinic acid moieties is from about 0.7 to about 2.0 per equivalent weight of polyisobutylene, and more preferably from about 1.00 to about 1.5 per equivalent weight of polyisobutylene.

When the succiminide has available secondary amino functionality, the reaction can be depicted generally by the following equation:

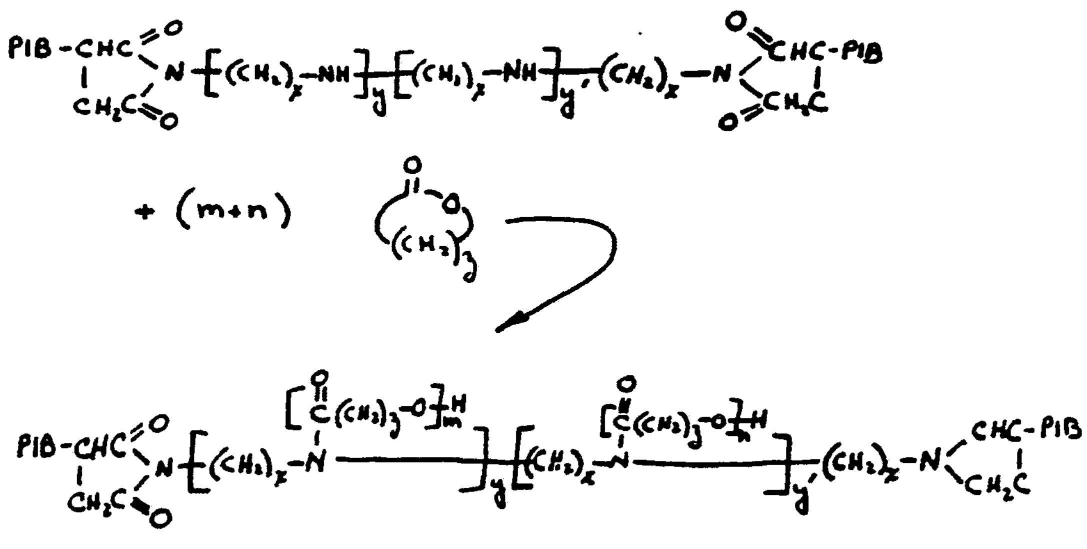

Eq. 6

where x is a number from 1 to 4, y is a number from 1 to 6, y' is a number from 1 to 6, z is a number from 4 to 8,and m and n have an average value of from zero to about 100, preferably from 1 to about 20, provided however that both m and n can not be zero.

Catalysts useful in the promotion of the above-identified reaction are selected from the group consisting of stannous octanoate, stannous hexanoate, stannous oxalate, tetrabutyl titanate, a variety of metal organic based catalysts, acid catalysts and amine catalysts, as described on page 266, and forward in a book chapter authored by R. D. Lundberg and E. F. Cox entitled, "Kinetics and Mechanisms of Polymerization: Ring Opening Polymerization"; edited by Frisch and Reegen, published by Marcel Dekker in 1969, wherein stannous octanoate is an especially preferred catalyst. The catalyst may be added to the reaction mixture at any effective concentration level. However, the catalyst generally is added at a concentration level of about 50 to about 10,000 parts of catalyst per one million parts by weight of total reaction mixture.

When initiating the polymerization of the lactone monomer under the conditions described herein, the lactone will react selectively first with primary amino groups present in the initiator molecule and form a polymer adduct containing the polylactone ester group and a terminal hydroxyl group. In the absence of a catalyst,any excess lactone monomer will either react with a secondary amino group present in the initiator molecule or with the hydroxyl group formed via the reaction of the lactone with the primary amino groups. In the presence of a catalyst, such as stannous octanoate, it is believed that the lactone preferably will react somewhat more readily with the terminal hydroxyl group than with a secondary amino group thus producing a polylactone ester adduct. If the stoichiometry of the initiator is such that very few primary amino groups are available, secondary amino groups will be converted to polylactone adducts. This preferance towards reaction with the primary amino groups results in an added benefit in those specific applications where the presence of primary amines is considered to be deleterious to performance (such as in diesel dispersancy). In those cases, the present invention provides a means for replacing the deleterious amine group with an amide function and a desirable hydroxyl group.

In the reactions shown above in Equation 6, the values of m and n or the average degree of polymerization (DP) (wherein $DP=(m+n)\div 2$) of the lactone monomers may vary depending upon the intended application. At DP's of much greater than about 10, e.g., greater than about 50, the polylactone adducts can exhibit crystallinity; a characteristic which is undesirable in an oil soluble dispersant due to the consequent high viscosity or even solid, oil products which can be obtained. However, at lower DP's, oil soluble adducts possessing low viscosity and desirable sludge and varnish inhibition characteristics are obtained.

Accordingly, regardless of the identity of the lactone and neutralized hydrocarbyl substituted dicarboxylic acid material, the average degree of polymerization (DP) should be between about 1 and about 100, more preferably between about 1 and about 50, and most preferably between about 0.2 and about 20.

Further aspects of the present invention reside in the formation of metal complexes and other post-treatment derivatives, e.g., borated derivatives,of the novel additives prepared in accordance with this invention. Suitable metal complexes may be formed in accordance with known techniques of employing a reactive metal ion species during or after the formation of the present $C_5$-$C_9$ lactone derived dispersant materials. Complex-forming metal reactants include the nitrates, thiocyanates, halides, carboxylates, phosphates, thio-phosphates, sulfates, and borates of transition metals such as iron, cobalt, nickel, copper, chromium, manganese, molybdenum, tungsten, ruthenium, palladium, platinum, cadmium, lead, silver, mercury, antimony and the like. Prior art disclosures of these complexing reactions may be found in U.S. Patents 3,306,908 and Re. 26,433.

Post-treatment composition include those formed by reacting the novel additives of the present invention with one or more post-treating reagents, usually selected from the group consisting of boron oxide, boron oxide hydrate, boron halides,boron esters, boron acids, sulfur, sulfur chlorides, phosporous sulfides and oxides, carboxylic acid or anhydride acylating agents, epoxides and episulfides and acrylonitriles. The reaction of such post-treating agents with the novel additives of this invention is carried out using procedures known in the art. For example, boration may be accomplished in accordance with the teachings of U.S. Patent 3,254,025 by treating the $C_5$-$C_9$ lactone derived additive compound with a boron oxide, halide, ester or acid. Treatment may be carried out by adding about 1-3 wt.% of the boron compound, preferably boric acid, and heating and stirring the reaction mixture at about 135° C to 165° C for 1 to 5 hours followed by nitrogen stripping and filtration, if desired. Mineral oil or inert organic solvents facilitate the process.

## THE COMPOSITIONS

The lactone derived additives of the present invention have been found to possess very good dispersant properties as measured herein in a wide variety of environments.

Accordingly, the lactone derived adducts are used by incorporation and dissolution into an oleaginous material such as fuels and lubricating oils.

When the dispersants of this invention are used in normally liquid petroleum fuels such as middle distillates boiling from about 66 to 427° C (150° to 800° F) including kerosene, diesel fuels, home heating fuel oil, jet fuels, etc., a concentration of the additive in the fuel in the range of typically from about 0.001 to about 0.5, and preferably 0.001 to about 0.1 weight percent, based on the total weight of the composition, will usually be employed.

The lactone derived dispersants find their primary utility in lubricating oil compositions which employ a base oil in which the additives are dissolved or dispersed.

Such base oils may be natural or synthetic although the natural base oils will derive a greater benefit.

Thus, base oils suitable for use in preparing lubricating compositions of the present invention include those conventionally employed as crankcase lubricating oils for spark-ignited and compression-ignited internal combustion engines, such as automobile and truck engines, marine and railroad diesel engines, and the like. Advantageous results are also achieved by employing the dispersant additives of the present invention in base oils conventionally employed in and/or adapted for use as power transmitting fluids such as automatic transmission fluids, tractor fluids, universal tractor fluids and hydraulic fluids, heavy duty hydraulic fluids,power steering fluids and the like. Gear lubricants, industrial oils, pump oils and other lubricating oil compositions can also benefit from the incorporation therein of the additives of the present invention.

Thus, the additives of the present invention may be suitably incorporated into synthetic base oils such as alkyl esters of dicarboxylic acids, polyglycols and alcohols, polyalphaolefins, alkyl benzenes, organic esters of phosphoric acids, polysilicone oils, etc.

Natural base oils include mineral lubricating oils which may vary widely as to their crude source, e.g., whether paraffinic, naphthenic, mixed, paraffinic-naphthenic, and the like; as well as to their formation, e.g., distillation range, straight run or cracked, hydrofined, solvent extracted and the like.

More specifically, the natural lubricating oil base stocks which can be used in the compositions of this invention may be straight mineral lubricating oil or distillates derived from paraffinic, naphthenic, asphaltic, or mixed base crudes, or, if desired, various blends oils may be employed as well as residuals, particularly those from which asphaltic constituents have been removed. The oils may be refined by conventional methods using acid, alkali, and/or clay or other agents such as aluminum chloride, or they may be extracted oils produced, for example, by solvent extraction with solvents of the type of phenol, sulfur dioxide, furfural, dichlorodiethyl ether, nitrobenzene, crotonaldehyde,

The lubricating oil base stock conveniently has a viscosity of typically about 2.5 to about 12, and preferably about 2.5 to about 9 $mm^2$/sec (cs.) at 100° C.

Thus, the lactone derived additives of the present invention can be employed in a lubricating oil composition which comprises lubricating oil, typically in a major amount, and the dispersant additive, typically in a minor amount, which is effective to impart enhanced dispersancy, relative to the absence of the additive. Additional conventional additives selected to meet the particular requirements of a selected type of lubricating oil composition can be included as desired.

The dispersants of this invention are oil-soluble, dissolvable in oil with the aid of a suitable solvent, or are stably dispersible materials. Oil-soluble, dissolvable, or stably dispersible as that terminology is used herein does not necessarily indicate that the materials are soluble, dissolvable, miscible, or capable of being suspended in oil in all proportions. It does mean, however, that the dispersant additives, for instance, are soluble or stably dispersible in oil to an extent sufficient to exert their intended effect in the environment in which the oil is employed. Moreover, the additional incorporation of other additives may also permit incorporation of higher levels of a particular dispersant, if desired.

Accordingly, while any effective amount of the dispersant additives can be incorporated into the lubricating oil composition, it is contemplated that such effective amount be sufficient to provide said lube oil composition with an amount of the additive of typically from about 0.01 (especially 0.10) to about 15 e.g., 0.1 to 10, and preferably from about 0.1 to about 7 wt. %, based on the weight of said composition.

The dispersant additives of the present invention can be incorporated into the lubricating oil in any convenient way. Thus, they can be added directly to the oil by dispersing, or dissolving the same in the oil at the desired level of concentration typically with the aid of a suitable solvent such as toluene, or tetrahydrofuran. Such blending can occur at room temperature or elevated temperatures. Alternatively, the dispersant additives may be blended with a suitable oil-soluble solvent and base oil to form a concentrate, and then blending the concentrate with lubricating oil base stock to obtain the final formulation. Concentrates will typically contain from about 20 to about 60 wt.%, by weight dispersant additive, and typically from about 80 to about 20%, preferably from about 60 to about 20% by weight base oil, based on the concentrate weight.

The lubricating oil base stock for the dispersant additives of the present invention typically is adapted to perform a selected function by the incorporation of additives therein to form lubricating oil compositions (i.e., formulations).

Representative additives typically present in such formulations include viscosity modifiers, corrosion inhibitors, oxidation inhibitors, friction modifiers, other dispersants, anti-foaming agents, anti-wear agents, pour point depressants, detergents, rust inhibitors and the like.

Viscosity modifiers impart high and low temperature operability to the lubricating oil and permit it to remain shear stable at elevated temperatures and also exhibit acceptable viscosity or fluidity at low temperatures.

Viscosity modifiers are generally high molecular weight hydrocarbon polymers including polyesters. The viscosity modifiers may also be derivatized to include other properties or functions, such as the addition of dispersancy properties.

These oil soluble viscosity modifying polymers will generally have number average molecular weights of from $10^3$ to $10^6$, preferably $10^4$ to $10^6$, e.g., 20,000 to 250,000, as determined by gel permeation chromatography or membrane osmometry.

Representative examples of suitable viscosity modifiers are any of the types known to the art including polyisobutylene, copolymers of ethylene and propylene, polymethacrylates, methacrylate copolymers, copolymers of an unsaturated dicarboxylic acid and vinyl compound, interpolymers of styrene and acrylic esters, and styrene/isoprene copolymers.

Corrosion inhibitors, also known as anticorrosive agents, reduce the degradation of the metallic parts contacted by the lubricating oil composition. Illustrative of corrosion inhibitors are phosphosulfurized hydrocarbons and the products obtained by reaction of a phosphosulfurized hydrocarbon with an alkaline earth metal oxide or hydroxide, preferably in the presence of an alkylated phenol or of an alkylphenol thioester, and also preferably in the presence of carbon dioxide. Phosphosulfurized hydrocarbons are prepared by reacting a suitable hydrocarbon such as a terpene, a heavy petroleum fraction of a $C_2$ to $C_6$ olefin polymer such as polyisobutylene, with from 5 to 30 wt.% of a sulfide of phosphorus for 1/2 to 15 hours, at a temperature in the range of 66 to 316 °C (150° to 600 °F). Neutralization of the phosphosulfurized hydrocarbon may be effected in the manner taught in U.S. Patent No. 1,969,324.

Oxidation inhibitors reduce the tendency of mineral oils to deteriorate in service which deterioration can be evidenced by the products of oxidation such as sludge and varnish-like deposits on the metal surfaces, and by viscosity growth. Such oxidation inhibitors include alkaline earth metal salts of alkylphenolthioesters having preferably $C_5$ to $C_{12}$ alkyl side chains, e.g., calcium nonylphenol sulfide, barium t-oxtylphenyl sulfide, dioctylphenylamine, phenylalphanaphthylamine, phosphosulfurized or sulfurized hydrocarbons, etc.

Friction modifiers serve to impart the proper friction characteristics to lubricating oil compositions such as automatic transmission fluids.

Representative examples of suitable friction modifiers are found in U.S. Patent No. 3,933,659 which discloses fatty acid esters and amides; U.S. Patent No. 4,176,074 which describes molybdenum complexes of polyisobutyenyl succinic anhydride-amino alkanols; U.S. Patent No. 4,105,571 which discloses glycerol esters of dimerized fatty acids; U.S. Patent No. 3,799,928 which discloses alkane phosphonic acid salts; U. S. Patent No. 3,778,375 which discloses reaction products of a phosphonate with an oleamide; U. S. Patent No. 3,852,205 which discloses S-carboxyalkylene hydrocarbyl succinimide, S-carboxyalkylene hydrocarbyl succinamic acid and mixtures thereof; U. S. Patent No. 3,879,306 which discloses N-(hydroxyalkyl)alkenyl-succinamic acids or succinimides; U. S. Patent No. 3,932,290 which discloses reaction products of di-(lower alkyl) phosphites and epoxides; and U. S. Patent No. 4,028,258 which discloses the alkylene oxide adduct of phosphosulfurized N-(hydroxyalkyl) alkenyl succinimides. The most preferred friction modifiers are succinate esters, or metal salts thereof, of hydrocarbyl substituted succinic acids or anhydrides and thiobis alkanols such as described in U. S. Patent No. 4,344,853.

Dispersants maintain oil insolubles, resulting from oxidation during use, in suspension in the fluid thus preventing sludge flocculation and precipitation or deposition on metal parts. Suitable dispersants include high molecular weight alkyl succinates, the reaction product of oil-soluble polyisobutylene succinic anhydride with ethylene amines such as tetraethylene pentamine and borated salts thereof.

Pour point depressants lower the temperature at which the fluid will flow or can be poured. Such depressants are well known. Typically of those additives which usefully optimize the low temperature fluidity of the fluid are $C_8$-$C_{18}$ dialkylfumarate vinyl acetate copolymers, polymethacrylates, and wax naphthalene. Foam control can be provided by an antifoamant of the polysiloxane type, e.g., silicone oil and polydimethyl siloxane.

Anti-wear agents, as their name implies, reduce wear of metal parts. Representatives of conventional anti-wear agents are zinc dialkyldithiophosphate, and zinc diaryldithiosphate.

Detergents and metal rust inhibitors include the metal salts of sulphonic acids, alkyl phenols, sulfurized alkyl phenols, alkyl salicylates, naphthenates and other oil soluble mono- and di-carboxylic acids. Highly basic (viz, overbased) metal salts, such as highly basic alkaline earth metal sulfonates (especially Ca and Mg salts) are frequently used as detergents.

Some of these numerous additives can provide a multiplicity of effects, e.g. a dispersant-oxidation inhibitor. This approach is well known and need not be further elaborated herein.

Compositions when containing these conventional additives are typically blended into the base oil in amounts which are effective to provide their normal attendant function. Representative effective amounts of such additives are illustrated as follows:
additive concentrates comprising concentrated solutions or dispersions of the dispersant (in concentrate amounts hereinabove described), together with one or more of said other additives (said concentrate when constituting an additive mixture being referred to herein as an additive-package) whereby several additives can be added simultaneously to the base oil to form the lubricating oil composition. Dissolution of the additive concentrate into the lubricating oil may be facilitated by solvents and by mixing accompanied with mild heating, but this is not essential. The concentrate or additive-package will typically be formulated to contain the dispersant additive and optional additional additives in proper amounts to provide the desired concentration in the final formulation when the additive-package is combined with a predetermined amount of base lubricant. Thus, the dispersant of the present invention can be added to small amounts of base oil or other compatible solvents along with other desirable additives to form additive-packages containing active ingredients in collective amounts of typically from about 2.5 to about 90%, and preferably from about 5 to about 75%, and most preferably from about 8 to about 50% by weight additives in the appropriate proportions with the remainder being base oil.

The final formulations may employ typically about 10 wt.% of the additive-package with the remainder being base oil.

All of said weight percent expressed herein are based on active ingedient (A.I.) content of the additive, and/or upon the total weight of any additive-package, or formulation which will be the sum of the A.I. weight of each additive plus the weight of total oil or diluent.

This invention will be further understood by reference to the following examples, wherein all parts are parts by weight and all molecular weights are number average molecular weight unless otherwise noted, and which include preferred embodiments of the invention.

EXAMPLE 1

Part A

A polyisobutenyl succinic anhydride (PIBSA) having an SA:PIB ratio of 1.04 succinic anhydride (SA) moieties per polyisobutylene (PIB) molecule of 940 $M_n$ was prepared by heating a mixture of 100 parts of polyisobutylene with 13 parts of maleic anhydride to a temperature of about 220° C. When the temperature reached 120° C, chlorine addition was begun and 1.05 parts of chlorine at a constant rate were added to the hot mixture for about 5 hours. The reaction mixture was then heat soaked at 220° C. for about 1.5 hours and then stripped with nitrogen for about 1 hour. The resulting polyisobutenyl succinic anhydride had an ASTM Saponification Number of 112 which calculates to a succinic anhydride (SA) to polyisobutylene (PIB) ratio of 1.04 based upon the starting PIB as follows:

$$\text{SA:PIB ratio} = \frac{SAP \times M_n}{112200 - (96 \times SAP)} = \frac{112 \times 940}{112200 - (96 \times 112)} = 1.04$$

The PIBSA product was 90 wt. % active ingredient (a.i.), the remainder being primarily unracted PIB. The SA:PIB ratio of 1.04 is based upon the total PIB charged to the reactor as starting material, i.e., both the PIB which reacts and the PIB which remains unreacted.

Part B

The PIBSA of Part A was aminated as follows: 1500 grams (1.5 moles) of the PIBSA and 1666 grams of S150N lubricating oil (solvent neutral oil having a viscosity of about 150 SSU at 100° C.) were mixed in a reaction flask and heated to about 149° C. Then, 193 grams (1 mole) of a commercial grade of polyethyleneamine which was a mixture of polyethyleneamines averaging about 5 to 7 nitrogen per molecule, hereinafter referred to as PAM, was added and the mixture was heated to 150° C. for about 2 hours; followed by 0.5 hours of nitrogen stripping, then cooling to give the final product (PIBSA-PAM). This product has a viscosity of 140 cs. at 100° C., a nitrogen content of 2.12 wt. % and contained approximately 50 wt. % PIBSA-PAM and 50 wt. % unreacted PIB and mineral oil (S150N).

Part C

The PIBSA-PAM of Part B was reacted with E-caprolactone to form a polycaprolactone adduct as follows:

About 200 grams (0.06 moles) of the PIBSA-PAM was mixed with 3.42 grams (0.03 moles) of E-caprolactone (CL) and 0.25 grams of stannous octanoate. This reaction mixture was heated to 150° C. and held at this temperature for 2 hours while stirring under a nitrogen blanket. The resulting polycaprolactone adduct was then stripped with a mild stream of nitrogen for one half hour and collected. Infrared analysis of the polycaprolactone adduct indicated complete opening of the lactone ring. The polycaprolactone adduct had a nitrogen content of 2.06 wt. % and a hydroxyl number of 39.6.

EXAMPLE 2

The procedure of EXAMPLE 1 was followed, except that in Part C 10.26 grams (0.09 moles) of E-caprolactone were reacted with 100 grams (0.06 moles) of the PIBSA-PAM and 0.25 grams of stannous octanoate. The resulting polycaprolactone adduct had a nitrogen content of 2.02 wt. % and a hydroxyl number of 32.8.

EXAMPLE 3

The procedure of EXAMPLE 1 was followed, except that in Part C 34.2 grams (0.3 moles) of E-caprolactone were reacted with 200 grams (0.06 moles) of the PIBSA-PAM and 0.25 grams of stannous octanoate. The resulting polylactone adduct had a nitrogen content of 1.79 wt. % and a hydroxyl number of 25.7.

EXAMPLE 4

Part A

A polyisobutenyl succinic anhydride (PIBSA) having an SA:PIB ratio of 1.31 succinic anhydride (SA) moieties per polyisobutylene (PIB) molecule of 1300 $M_n$ was prepared by heating a mixture of 100 parts of polyisobutylene with 13 parts of maleic anhydride to a temperature of about 220° C. When the temperature reached 120° C., chlorine addition was begun and 10.5 parts of chlorine at a constant rate were added to the hot mixture for about 5 hours. The reaction mixture was then heat soaked at 220° C. for about 1.5 hours and then stripped with nitrogen for about 1 hour. The resulting polyisobutenyl succinic anhydride had an ASTM Saponfication Number of 103 which calculates to a succinic anhydride (SA) to polyisobutylene (PIB) ratio of 1.31 based upon the starting PIB as follows:

$$\text{SA:PIB ratio} = \frac{103 \times 1300}{112200 - (96 \times 103)} = 1.31$$

The PIBSA product was 88 wt. % active ingredient (a.i.), the remainder being primarily unreacted PIB. The SA:PIB ratio of 1.31 is based upon the total PIB charged to the reactor as starting material, i.e., both the PIB which reacts and the PIB which remains unreacted.

Part B

The PIBSA of Part A was aminated as follows:

1631 grams (1.5 moles) of the PIBSA and 1397 grams of S150N lubricating oil (solvent neutral oil having a viscosity of about 150 SSU at 100° C.) was mixed in a reaction flask and heated to about 149° C. Then, 189 grams (1 mole) of a tetraethylene pentamine was added and the mixture was heated to 150° C. for about 2 hours; followed by 2 hours of nitrogen stripping, then cooling to give the final product (PIBSA-AMINE). This product had a viscosity of 132 cs. at 100° C., a nitrogen content of 1.46 wt. % and contained approximately 50 wt. % a.i., i.e. the material contained about 50 wt. % PIBSA-AMINE and 50 wt. % unreacted PIB and mineral oil (S150N).

Part C

The PIBSA-AMINE of Part B was reacted with E-caprolactone as follows:

About 0.06 moles of the PIBSA-AMINE was mixed with 3.42 grams (0.03 moles) of E-caprolactone (CL) and 0.25 grams of stannous octanoate. This reaction mixture was heated to 150° C. and held at this temperature for 2 hours while stirring under a nitrogen blanket. The resulting polycaprolactone adduct was then stripped with a mild stream of nitrogen for one half hour and collected. Infrared analysis of the adduct indicated complete opening of the lactone ring. The product had a viscosity of 239 cs. at 100° C., a nitrogen content of 1.72 wt. %, and a hydroxyl number of 28.1.

EXAMPLE 5

The Procedure of EXAMPLE 4 was followed, except that in Part C 7.6 grams (0.06 moles) of E-caprolactone were reacted with 0.06 moles of the PIBSA-AMINE and 0.25 grams of stannous octanoate. The resulting polycaprolactone adduct had a nitrogen content of 1.83 wt. % and a hydroxyl number of 34.9.

EXAMPLE 6

The procedure of EXAMPLE 4 was followed, except that in Part C 34.2 grams (0.3 moles) of E-caprolactone were reacted with 0.06 moles of the PIBSA-AMINE and 0.25 grams of stannous octanoate and the reactants had to be heated about 5 hours at 150° C. to consume all of the lactone as indicated by infrared analysis. The resulting polycaprolactone adduct had a nitrogen content of 1.75 wt. %, and a hydroxyl number of 29.7.

EXAMPLE 7

About 200 grams (0.046 moles) of a PIBSA-PAM dispersant derived from the reaction of 2.1 moles of

PIBSA (ASTM Saponification Number 112, PIB $M_n$=940) and 1 mole of PAM was mixed with 16 grams (0.14 moles) of E-caprolactone and 2.25 grams of stannous octanoate. The mixture was heated to 160° C. and periodically checked by infrared analysis. It took about 4 hours for the lactone to be consumed and the resulting PIBSA-PAM-CL polycaprolactone adduct had a nitrogen content of 1.42 wt. % and a hydroxyl number of 13.3.

EXAMPLE 8

The procedure of EXAMPLE 7 was followed, except that the PIBSA-PAM was mixed with 160 grams (1.4 moles) of E-caprolactone 0.25 grams of stannous octanoate and the reaction mixture was heated at 160° C. for eleven hours. The resulting polycaprolactone adduct had a nitrogen content of 1.16 wt. %, and a hydroxyl number of 7.36.

EXAMPLE 9
Part A

A polyisobutenyl succinic anhydride-tripropylenetetraamine bicyclic type dispersant was prepared as follows:

About 288 parts(1.0 mole) of tripropylenetetramine were mixed with 997 g of mineral oil 150 neutral and 200 ml of xylene. The reaction mixture was heated to 80° C. while stirring under a nitrogen blanket. Thereafter, 1723 g of a polyisobutenyl succinic anhydride having a SA:PIB ratio of 0.80 succinic anhydride (SA) moieties per polyisobutylene (PIB) molecules of 1300 $M_n$ and prepared by the thermal "ENE" process were slowly added while keeping the reaction mixture below 100° C. Upon completion of the addition of PIBSA, the reaction mixture was heated to 173° C while azeotroping the water of reaction. Heating was continued for about four hours to insure complete conversion to the macrocyclic product as indicated by infrared analysis. The product was nitrogen stipped for one hour and filtered. The resulting macrocyclic product analyzed for 1.76 wt. % nitrogen.

Part B

To about 0.1 mole of the PIBSA-macrocyclic product there was added 1.14 grams (0.01 moles) of E-caprolactone 0.25 grams of stannous octanoate. The mixture was heated to 150° C. for about 2 hours, whereupon infrared analysis indicated complete reaction of the lactone. The resulting PIBSA-macrocyclic-CL adduct had a hydroxyl number of 40.6.

EXAMPLE 10

The procedure of EXAMPLE 9 was repeated, except that in Part C 3.42 grams (0.03 moles) of E-caprolactone were reacted with the PIBSA-macrocyclic dispersant. The resulting polycaprolactone adduct had a hydroxyl number of 38.5.

Table I, which follows summarizes the characteristics of the dispersant materials prepared in accordance with EXAMPLE 1-10.

**TABLE I**

**PROPERTIES OF PIBSA-AMINE-CL PRODUCT**

| Polycaprolactone Adduct, Ex. No. | SA:PIB[1] | Wt.%N | Hydroxyl No. | PIB, $M_n$[2] | SAP[3] | PIBSA/AMINE[4] | AMINE[5] | CL/PIBSA[6] |
|---|---|---|---|---|---|---|---|---|
| 1 | 1.04 | 2.06 | 39.6 | 940 | 112 | 1.5 | PAM | 0.5 |
| 2 | 1.04 | 2.02 | 32.8 | 940 | 112 | 1.5 | PAM | 1.5 |
| 3 | 1.04 | 1.79 | 25.7 | 940 | 112 | 1.5 | PAM | 5.0 |
| 4 | 1.31 | 1.72 | 28.1 | 1300 | 103 | 1.5 | TEPA | 0.5 |
| 5 | 1.31 | 1.83 | 34.9 | 1300 | 103 | 1.5 | TEPA | 1.0 |
| 6 | 1.31 | 1.75 | 29.7 | 1300 | 103 | 1.5 | TEPA | 5.0 |
| 7 | 1.04 | 1.42 | 13.3 | 940 | 112 | 2.1 | PAM | 3.0 |
| 8 | 1.04 | 1.16 | 7.36 | 940 | 112 | 2.1 | PAM | 30 |
| 9 | 0.80 | 1.76 | 40.6 | 1300 | 65 | 1.0 | MC[7] | 0.1 |
| 10 | 0.80 | 1.72 | 38.5 | 1300 | 65 | 1.0 | MC | 3.0 |

1=ratio of succinic anhydride moieties (SA) per polyisobutylene (PIB) molecule.
2=number average molecular weight of the PIB molecules.
3=ASTM Saponification Number AM-I-769-81
4=ratio of polyisobutylene succinic anhydride (PIBSA) moieties to amine compound moieties.
5=amine compound rected with PIBSA, e.g., $N_5$-$N_7$ polyethyleneamines (PAM), triethylene tetramine, tetraethylene pentamine (TEPA), etc.
6=ratio of ε-caprolactone (CL) moieties to PIBSA moieties.
7=Bicyclic tripropylenetetramine

## Sludge Inhibition and Varnish Inhibition Bench Tests

Thirteen sample polycaprolactone adducts were prepared in a manner similar to that set forth in Part C of the foregoing EXAMPLES , and the resulting adducts were subjected to a standard sludge inhibition

bench test (SIB) and a standard varnish inhibition bench test (VIB). Sample PIBSA-AMINE dispersants were also prepared in a manner similar to that set forth in Part B of the foregoing EXAMPLES. The PIBSA-AMINE dispersants also were subjected to the SIB and VIB tests to provide a basis of comparison between the polycaprolactone adducts of this invention and the corresponding prior art PIBSA-AMINE dispersants.

The SIB and VIB tests forecast the performance of a lubricant in a gasoline engine. These tests are described below:

The SIB Test employs a used crankcase mineral lubricating oil composition having an original visocity of about 325 SSU at 37.8° C. that has been used in a taxicab driven generally for short trips only thereby causing a build up of a high concentration of sludge precursors. The oil used contains only a refined base mineral oil, a viscosity index improver, a pour point depressant and a zinc dialkyldithiophosphate anti-wear additive. The oil contains no sludge dispersants. Such used oil is acquired by draining and refilling taxicab crankcases at about 1610-3220 km (1,000-2,000) mile intervals.

The SIB Test is conducted in the following manner: The used crankcase oil is freed of sludge by centrifuging for one half hour at about 39,000 gravities (gs). The resulting clear bright red oil is then decanted from the insoluble sludge particles. However, the supernatant oil still contains oil-soluble sludge precursors which, under the conditions employed by this test, will tend to form additional oil-insoluble deposits of sludge. The sludge inhibiting properties of the additives being tested are determined by adding to portions of the used oil 0.5 wt. %, on an active basis, of the particular additive being tested. Ten grams of each oil sample being tested is placed in a stainless steel centrifuge tube and is heated at 140° C. for 16 hours in the presence of air. Following the heating, the tube containing the oil being tested is cooled and then centrifuged for 30 minutes at about 39,000 gs. Any deposits of new sludge that form in this step are separated from the oil by decanting supernatant oil and then carefully washed with 15 ml. of pentane to remove all remaining oils from the sludge. The weight, in milligrams, of the new solid sludge that forms in the test is determined by drying the residue and weighing it. The results are reported as milligrams of sludge per ten grams of oil, thus measuring differences as small as one part per ten thousand. The less new sludge formed, the more effective is the additive as a dispersant. In other words, if the additive is effective, it will hold at least a portion of the new sludge that forms on heating and oxidation, stably supended in the oil so that it does not precipitate during the centrifuging period.

In the VIB Test, a test sample consisting of ten grams of lubricating oil containing 0.5 wt. %, on an active basis, of the additive being evaluated is used. The test oil is a commercial lubricating oil obtained from a taxi after about 3220 km (2000 miles) of driving with said lubricating oil. Each sample is heat soaked overnight at about 140° C. and thereafter centrifuged to remove the sludge. The supernatant fluid of each sample is subjected to heat cycling from about 150° C. to room temperature over a period of 3.5 hours at a frequency of about two cycles per minute. During the heating phase, a gas containing a mixture of 0.7 volume percent $SO_2$, 1.4 volume percent NO and the balance air is bubbled through the test samples and during the cooling phase, water vapor was bubbled through the test samples. At the end of the test period, which testing cycle can be repeated as necessary to determine the inhibiting effect of any additive, the wall surfaces of the test flasks in which the samples are contained are visually evaluated as to the varnish inhibition. The amount of varnish deposited on the walls is rated at values of from one to eleven with the higher number being the greater amount of varnish. It has been found that this test forecasts the varnish results obtained as a consequence of carrying out the ASTM MS-VD engine test which is described more fully hereinbelow.

Table II, which follows, summarizes the compositions tested and the test results.

TABLE II

SLUDGE INHIBITION AND VARNISH INHIBITION BENCH TESTS

| SAMPLE No. | SA:PIB | Wt.%N | PIB, Mn | SAP | PIBSA/ AMINE | AMINE | CL/PIBSA | SIB[1] | VIB[2] | HAZE[3] | Primary Amine[4] Content |
|---|---|---|---|---|---|---|---|---|---|---|---|
| 1-C | 1.04 | 2.12 | 950 | 112 | 1.5 | PAM | 0 | 5.3 | 6 | 38 | N/D |
| 1-1 | 1.04 | 2.06 | 950 | 112 | 1.5 | PAM | 0.33 | 5.70 | 5 | 48 | N/D |
| 1-2 | 1:04 | 2.02 | 950 | 112 | 1.5 | PAM | 1.0 | 5.63 | 7 | 40 | N/D |
| 1-3 | 1.04 | 1.79 | 950 | 112 | 1.5 | PAM | 10.0 | 10.0 | 4 | 100+ | N/D |
| 2-C | 1.31 | 1.76 | 1300 | 103 | 1.5 | TEPA | 0 | 3.0 | 5 | 60 | N/D |
| 2-1 | 1.31 | 1.72 | 1300 | 103 | 1.5 | TEPA | 0.33 | 2.5 | 3 | 55 | N/D |
| 2-2 | 1.31 | 1.73 | 1300 | 103 | 1.5 | TEPA | 0.66 | 1.81 | 3 | 45 | N/D |
| 2-3 | 1.31 | | 1300 | 103 | 1.5 | TEPA | 1.66 | 7.36 | 2 | N/D[5] | N/D |
| 3-C | 1.31 | 1.78 | 1300 | 103 | 1.5 | PAM | 0 | 3.06 | 5 | 49 | N/D |
| 3-1 | 1.31 | 1.67 | 1300 | 103 | 1.5 | PAM | 1.0 | 2.06 | 3-4 | 29 | N/D |
| 4-C | 0.80 | 1.76 | 1300 | 65 | 1.0 | MC | 0 | 1.99 | 3 | N/D | .27 |
| 4-1 | 0.80 | 1.72 | 1300 | 65 | 1.0 | MC | 0.1 | 1.99 | 3 | N/D | .01 |
| 4-2 | 0.80 | 1.74 | 1300 | 65 | 1.0 | MC | 0.3 | 2.52 | 3.5 | N/D | .005 |
| 4-3 | 0.80 | 1.67 | 1300 | 65 | 1.0 | MC | 0.5 | 3.11 | 3.5 | N/D | .005 |
| 4-4 | 0.80 | 1.70 | 1300 | 65 | 1.0 | MC | 1.0 | 3.64 | 3 | N/D | .005 |
| 5-C | 1.04 | 1.56 | 950 | 112 | 2 | PAM | 0 | 4.25 | 5 | N/D | N/D |
| 5-1 | 1.04 | 1.42 | 950 | 112 | 2 | PAM | 6 | 6.94 | 4 | N/D | N/D |
| 5-2 | 1.04 | 1.16 | 950 | 112 | 2 | PAM | 12 | N/D | N/D | N/D | N/D |

1=mg sludge per 10 mg of sludge (rated on basis of 1 to 10, 1 being the best rating).
2=varnish ratin; visual (rated 1 to 11, 1 being the best rating).
3=nephelometer readings
4=ASTM method per primary amine value
5=not determined.

The data in Table II shows that the VIB and SIB values of the various polycaprolactone adducts are, in most cases, improved over the controls. At higher levels of E-caprolactone addition, there is evidence of some increase in sludge as indicated by the SIB values. However, in all practical systems the values obtained using the polycaprolactone adducts of this invention are within acceptable limits.

ENGINE TESTS

EXAMPLE 11

A PIBSA-PAM dispersant product was made by reacting PAM with a PIBSA wherein the PIB had an average molecular weight of about 1300 and a SA:PIB ratio or functionality of 1.31. The PIBSA was prepared in a manner similar to that set forth in EXAMPLE 1, Part A. The properties of the PIBSA-PAM dispersant are set forth in Table III, hereinbelow.

EXAMPLE 12

A polycaprolactone adduct dispersant product was prepared by reacting E-caprolactone with the PIBSA-PAM dispersant product of EXAMPLE 11 in a manner similar to that set forth in EXAMPLE 1, Part C. The properties of the polycaprolactone adduct dispersant are shown in Table III.

EXAMPLE 13

A PIBSA-PAM dispersant product was made by reacting PAM with PIBSA wherein the PIB had an average molecular weight of 1725 and a SA:PIB ratio or functionality of 1.04. The PIBSA was prepared in a manner similar to that set forth in EXAMPLE 1, Part A. The properties of the PIBSA-PAM dispersant product are shown in Table III.

EXAMPLE 14

A polycaprolactone adduct dispersant product was prepared by reacting E-caprolactone with the PIBSA-PAM dispersant product of EXAMPLE 13 in a manner similar to that set forth in EXAMPLE 1, Part C. The properties of the polycaprolactone adduct are shown in Table III.

TABLE III

| EXAMPLE No. | SA:PIB | Wt.%N | PIB,$M_n$ | SAP | PIBSA/ PAM | A.I. | CL/ PIBSA | Initial Viscosity cs. at 100°C | SIB | VIB | HAZE |
|---|---|---|---|---|---|---|---|---|---|---|---|
| 11 | 1.31 | 1.78 | 1300 | 103 | 1.5 | 50 | 0 | 132.4 | 2.5 | 3 | 49 |
| 12 | 1.31 | 1.67 | 1300 | 103 | 1.5 | 50 | 1.5 | 239.0 | 3.23 | 3 | 29 |
| 13 | 1.04 | 1.14 | 1725 | 64 | 1.9 | 50 | 0 | 466.5 | 1.86 | 5 | N/D |
| 14 | 1.04 | 1.10 | 1725 | 64 | 1.9 | 50 | 0.5 | 507.6 | 1.40 | 5 | N/D |
| 15 | 1.07 | 0.98 | 2250 | 51 | 1.87 | 52 | 0.32 | 964 | N/D | N/D | 15 |
| 16 | 1.07 | 0.98 | 2250 | 51 | 1.87 | 52 | 0.9 | 1003 | N/D | N/D | 10 |
| 17 | 1.07 | 0.95 | 2250 | 51 | 1.87 | 52 | 1.3 | 1040 | N/D | N/D | 16 |

EXAMPLES 15 - 17

Polycaprolactone adduct dispersant products were prepared by reacting varying amount of E-caprolactone with a PIBSA-PAM dispersant that was made by reacting PAM with a PIBSA wherein the PIB had an

average molecular weight of 2250 and a SA:PIB ratio of 1.07. The PIBSA was prepared in a manner similar to that set forth in EXAMPLE 1, Part A and the E-caprolactone/PIBSA-PAM reaotion was carried out in the manner set forth in Part C of EXAMPLE 1. The properties of the polycaprolactone adduct dispersant products are shown in Table III.

EXAMPLE 18

Three lubricant formulations A, B and C were prepared by selectively adding a small amount of the dispersant products of EXAMPLES 11, 12 and 14, respectively, to a commercial grade 10W40 crankcase oil. The lubricant formulations also contained a hydrocarbon type viscosity index improver, a zinc dialkyl dithiophosphate, an overbased 400TBN magnesium sulfonate, an anti-friction additive and an anti-foamant. A fourth lubricant formulation, lubricant D, was prepared by adding a small amount of the dispersant product of EXAMPLE 15 to similar commercial crankcase oil, except that it was a 10W30 grade oil. Lubricant D also required a lesser amount of the viscosity index improver due to its 10W30 viscosity requirements. The Lubricants A - D were then tested in a MS sequence VD Engine Test. This test is well known in the automotive industry. It is described in ASTM Document for Multigrade Test Sequence for Evaluating Automotive Engine Oil,Sequence VD, Part 3 of STP 315H. At the end of each test, various parts of the engine are rated on a merit basis of 0 to 10, wherein 10 represents a perfectly clean part while lesser numbers represent increasing degrees of deposit formation. The various ratings are then totaled and averaged on a basis of 10 as a perfect rating. The test is carried out in a 1980 Model Ford 2.3L 4-cylinder engine under test conditions which simulate "stop and go" city driving and moderate temperature operations. The various lubricant formulations and the cleanliness results obtained therewith are given in Table IV.

## TABLE IV

### LUBRICANT FORMULATIONS AND MS SEQUENCE VD TEST RESULTS

| LUBRICANT | DISPERSANT PRODUCT (Example No.) | Dispersant Conc; Vol.% | GRADE | PIB, $M_n$ | SA:PIB | SAP | CL/ PIBSA | SLUDGE | VARNISH, AVERAGE | PISTON SKIRT VARNISH |
|---|---|---|---|---|---|---|---|---|---|---|
| A | 11 | 4.0 | 10W40 | 1300 | 1.31 | 103 | 0 | 9.47 | 6.66 | 7.25 |
| B | 12 | 4.0 | 10W40 | 1300 | 1.31 | 103 | 1.5 | 9.50 | 7.65 | 7.52 |
| C | 14 | 4.0 | 10W40 | 1725 | 1.04 | 64 | 0.5 | 9.59 | 6.91 | 6.75 |
| D | 15 | 3.2 | 10W30 | 2250 | 1.07 | 51 | 0.32 | 9.53 | 7.19 | 7.08 |

Table IV shows that the addition of 4.0 vol. % of a polycaprolactone adduct dispersant to a commercial grade 10W40 crankcase oil (Lubricant B) exhibited almost a full varnish unit credit over the same crankcase oil containing 4.0 vol. % of a corresponding PIBSA-PAM dispersant of the prior art type (Lubricant A). Since an acceptable average varnish rating is about 6.6, the increase in varnish rating obtained with Lubricant B over Lubricant A indicates that commercially acceptable lubricants can be formulated using a smaller

dispersant concentration if the polycaprolactone adduct dispersants of this invention are used in place of the prior art PIBSA-PAM type dispersants. This ability to use a lower dispersant concentration translates into a more economical product without having to sacrifice quality and performance and is a highly desirable result.

Although no direct comparisons can be drawn between Lubricants C and A, and between Lubricants D and A because of the different PIBSA-PAM characteristics and because Lubricant D is based on a 10W30 oil, the data in Table IV indicate that lubricants which incorporate small amounts of the polycaprolactone adduct dispersants of the present invention exhibit average varnish ratings significantly above the commercially accepted required rating.

EXAMPLE 19

Nine lubricant formulations E - M were prepared by selectively adding a small amount of the dispersant products of EXAMPLES 11 - 17 to the same commercial grade 10W30 crankcase oil that was used to formulate Lubricant D. The lubricant formulations E - M were then tested in a Caterpillar 1-H2 Test, which was run for 120 hours rather than the full 480 hours as described in ASTM Document for Single Cylinder Engine Test for Evaluating the Performance of Crankcase Lubricants, Caterpillar 1-2H Test Method, Part 1, STP 509A. This test evaluates the ability of diesel lubricants to curtail accumulation of deposits on the piston when operating in high severity diesel engines. The various lubricant formulations and the results of the Caterpillar 1-2H Tests are shown in Table V.

## TABLE V

### LUBRICANT FORMULATIONS AND CATERPILLAR 1-2H TEST RESULTS

| Lubricant | DISPERSANT PRODUCT (Example No.) | Dispersant Conc., Vol. % | GRADE | PIB, $\bar{M}_n$ | SA:PIB | SAP | CL/ PIBSA | WTD[1] | TFG[2] |
|---|---|---|---|---|---|---|---|---|---|
| E | 11 | 4.0 | 10W30 | 1300 | 1.31 | 103 | 0 | 287 | 62 |
| F | 12 | 4.0 | 10W30 | 1300 | 1.31 | 103 | 1.5 | 494 | 54 |
| G | 12 | 2.0 | 10W30 | 1300 | 1.31 | 103 | 1.5 | 199 | 29 |
| H | 12 | 1.0 | 10W30 | 1300 | 1.31 | 103 | 1.5 | 199 | 44 |
| I | 13 | 4.0 | 10W30 | 1725 | 1.04 | 64 | 0 | 141 | 22 |
| J | 14 | 4.0 | 10W30 | 1725 | 1.04 | 64 | 1.5 | 131 | 36 |
| K | 15 | 4.0 | 10W30 | 2250 | 1.07 | 51 | 0.32 | 69 | 7 |
| L | 16 | 4.0 | 10W30 | 2250 | 1.07 | 51 | 0.9 | 201 | 31 |
| M | 17 | 4.0 | 10W30 | 2250 | 1.07 | 51 | 1.3 | 141 | 15 |

1=weighed total demerits
2=top groove fill

Table V shows that the prior art PIBSA - PAM type dispersant used at a concentration of 4.0 vol. % in Lubricant E resulted in a WTD (weight total demerits) of 287. This is not an acceptable result since a WTD of less than about 140 - 150 generally is accepted as being a passing number. Lubricant F, which has the same formulation as Lubricant E, except for the substitution of 4.0 vol. % of the polycaprolactone adduct dispersants of this invention for the 4.0 vol. % of the PIBSA - PAM of Lubricant E, also resulted in a WTD

higher than 140 - 150. In fact, the WTD for Lubricant F was actually higher and thus inferior to that obtained for Lubricant E, even though Lubricant F resulted in a slightly improved TGF (top groove fill) when compared to Lubricant E. Table V also shows, however, that when lubricant formulations are prepared using the polycaprolactone adduct dispersants of this invention is smaller amounts, i.e. a concentration levels of 2.0 vol. % (Lubricant G) or even 1.0 vol. % (Lubricant H), both the WTD and TGF results are considerably superior to those obtained for the comparable formulation containing 4.0 vol. % of a PIBSA - PAM type dispersant (Lubricant E).

The WTD and TGF results for both Lubricant I and Lubricant J are superior to those for Lubricants E - H. In both of these Lubricant formulations, the PIB $M_n$ is higher (1725 compared to 1300 for Lubricants E - H), and for Lubricant J, the CL/PIBSA ratio was reduced to 0.5 (as compared to 1.5 for Lubricants F,G and H). However, the WTD for Lubricant J, which contains 4.0 vol. % of a polycaprolactone adduct dispersant in accordance with the invention, is superior to that for Lubricant I, which contains 4.0 vol. % of a prior art PIBSA - PAM type dispersant.

The results for Lubricants K, L and M illustrate that a very superior lubricant was achieved by using a polycaprolactone adduct dispersant product which was prepared from a PIBSA - PAM wherein the PIBSA had a PIB, $M_n$ on the order of 2250, and wherein the CL/PIBSA ratio of the polycaprolactone adduct was on the order of 0.33 (Lubricant K). The overall superior results of Lubricant K with respect to the WTD and TGF values that were obtained is of even more significance when one considers the excellent results achieved by Lubricant D in the MS Sequence VD Engine Test. It will be noted that the Lubricant D has the same formulation as Lubricant K, except that Lubricant D contains 3.2 vol. % of the polycaprolactone adduct dispersant of EXAMPLE 15 instead of 4.0 vol. %. Thus, the results obtained with Lubricants D and K indicate that at least some of the polycaprolactone adduct dispersants of this invention can be used to formulate "universal" lubricants which offer superior performance in both diesel and gasoline engines.

EXAMPLE 20

About 2241g (1.4 mole) of a PIBSA of SAP 69 and 59% active ingredient and derived from a PIB of average molecylar weight of 1300 was diluted in S150N to make a 50% active ingredient final product. The diluted PIBSA was heated to 145-150°C and 180.4g (0.933 mole) of polyamine bottoms (PAM) were added dropwise while stirring and nitrogen sparging. The reaction mixture was held at 150°C for two hours and then nitrogen sparged for one half hour. The filtered and collected product analyzed for 1.78% N.

EXAMPLE 21

In the same manner as in Example 20, the process was repeated and the product was mixed with 159.6g (1.4 mole), of E-caprolactone and 0.1% stannous octanoate. The reaction mixture was heated to 150°C for 1 hours and then stopped for one half hour. The filtered and collected product analyzed for 1.67%N.

EXAMPLE 22

About 160g of the product of Example 21 were mixed with about 3.6g of boric acid and heated to 163°C while stirring and nitrogen sparging. The mixture was kept at 163°C to 2 hours, sparged with nitrogen for one half hour, and filtered. The resulting product analyzed for 0.32% boron.

EXAMPLE 23

About 4107g (1.87 mole) of a PIBSA of SAP 51 and 78% active ingredient derived from a PIB of 2250 average molecular weight was reacted with 193g (1.0 mole) of PAM at 145-150°C for two hours while nitrogen sparging. Then 127.4g (0.98 mole) of E-caprolactone were added and the reaction mixture was kept at 150°C for 2 hours while nitrogen sparging. Filtered and collected the product was previously diluted with solvent S150 neutral oil to produce a 50% active ingredient material. It analyzed for 0.93%N.

EXAMPLE 24

About 2800g of the material prepared in accordance with Example 23 were diluted with 28.98g of S150N and heated to 163°C while stirring under nitrogen blanket. Boric acid (43.03g) was added slowly for a period of two hours. The reaction mixture was heated at 163°C for another 2 hours while sparging with

nitrogen. Filtered and collected product analyzed for 0.90%N and 0.24% Boron.

Samples of the products prepared in Examples 20-22 were subjected to the standard sludge inhibition bench test (SIB) and standard varnish inhibition bench test (VIB). A control sample, i.e., a commercial borated-PIBSA-PAM (PIB molecular weight of 1300) was also tested for purposes of comparison. The results of the tests are shown in Table VI.

**TABLE VI**

| SAMPLE | MATERIAL[1] | SIB | VIB |
|---|---|---|---|
| EX. 20 | PIBSA-PAM | 3.06 | 4 |
| EX. 21 | PIBSA-PAM-CL | 1.50 | 3 |
| EX. 22 | Borated-PIBSA-PAM-CL | 1.15 | 3 |
| Control | Borated-PIBSA-PAM | 4.06 | 5 |

1=average molecular weight of PIB is 1300

The data in Table VI indicate that the borated dispersant prepared in accordance with the present invention (Example 22) is characterized by an improved SIB and VIB rating relative to a commercial borated-PIBSA-PAM and the prior art PIBSA-PAM type dispersants (Example 20). The data also indicate that improved SIB ratings can be achieved by borating the already improved PIBSA-PAM-CL dispersants of this invention.

A sample of the borated PIBSA-PAM-CL dispersant prepared in Example 24 was subjected to the above discussed MS sequence VD engine test. A control sample, i.e, a borated PIBSA-PAM (PIBSA molecular weight of 2250) was also tested for purposes of comparison. The results of the tests are shown in Table VII.

**TABLE VII**

| SAMPLE | MATERIAL[1] | %CL | SLUDGE | VARNISH AVERAGE | PISTON SKIRT VARNISH |
|---|---|---|---|---|---|
| EX. 24 | Borated PIBSA-PAM-CL | 1 | 9.52 | 7.12 | 6.87 |
| Control | Borated PIBSA-PAM | 0 | 9.56 | 6.71 | 6.41 |

1=average molecular weight of PIB=2250

The data in Table VII indicated that the borated dispersant of this invention is characterized by a varnish credit over the borated PIBSA-PAM control sample, while the sludge rating of the two samples is about the same.

This increase in varnish rating suggests that commercially acceptable lubricants can be formulated using a smaller dispersant concentration if the borated polycaprolactone adduct dispersants of this invention are used in place of the prior art borated PIBSA-PAM type dispersants.

As used in this specification and claims, the terms "dicarboxylic acid producing material" and

"dicarboxylic acylating agent" are used synonomously and are meant to describe dicarboxylic acids, anhydrides, esters, etc. Non-limiting examples of such materials include fumaric acid, itaconic acid, maleic acid, maleic anhydride, succinic acid, succinic anhydride, chloromaleic acid, dimethyl fumarate, chloromaleic anhydride, etc.

## Claims

1. A poly ($C_5$ - $C_9$ lactone) adduct of an aminated, hydrocarbyl substituted $C_4$ - $C_{10}$ dicarboxylic acid producing material useful as an oil additive and formed by reacting a $C_5$ - $C_9$ lactone, an amine, and a hydrocarbyl substituted $C_4$ - $C_{10}$ dicarboxylic acid producing material, said hydrocarbyl substituted $C_4$ - $C_{10}$ dicarboxylic acid producing material being formed by reacting an olefin polymer of a $C_2$ - $C_{10}$ monoolefin having a number average molecular weight of from 700 to 5,000 and a $C_4$ - $C_{10}$ monounsaturated dicarboxylic acid material, wherein there is an average of 0.7 to 2.0 dicarboxylic producing moieties per molecule of said olefin polymer used in the reaction, said poly ($C_5$ - $C_9$ lactone) adduct containing the unit

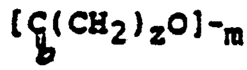

wherein m has a average value of from 0.2 to 100 and z is 4 to 8, said poly ($C_5$-$C_9$) lactone) adduct material being formed by first reacting said amine with said hydrocarbyl substituted dicarboxylic acid producing material to form a neutralized hydrocarbyl substituted dicarboxylic acid producing material having an amino functional group capable of initiating lactone open ring polymerization, and then reacting said lactone with said neutralized hydrocarbyl substituted dicarboxylic acid producing material.

2. The poly ($C_5$ - $C_9$ lactone) adduct material according to Claim 1, wherein said $C_5$ - $C_9$ lactone is E-caprolactone.

3. The polycaprolactone adduct material according to Claim 1 or Claim 2, wherein said $C_4$-$C_{10}$dicarboxylic acid producing material is maleic anhydride.

4. The polycaprolactone adduct material according to any of Claims 1 to 3, wherein said olefin polymer is polyisobutylene.

5. The polycaprolactone adduct material according to any of Claims 1 to 4, wherein said amine is selected from the group consisting of polyamines of 2 to 60 total carbon atoms and 2 to 12 nitrogen atoms in the molecule.

6. The polycaprolactone adduct material according to Claim 5, wherein said amine is an aliphatic saturated amine having the formula

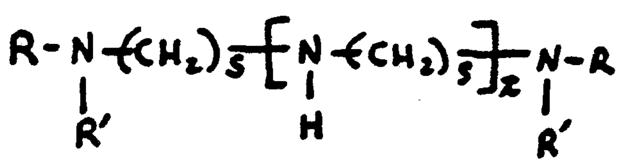

wherein R and R' independently are selected from the group consisting of hydrogen, $C_1$ to $C_{25}$ straight or branched chain alkyl radicals, $C_1$ to $C_{12}$ alkoxy $C_2$ to $C_6$ alkylene radicals, and $C_1$ to $C_{12}$ alkylamino $c_2$ to $C_6$ alkylene radicals; each s is the same or a different number of from 2 to 6; and t is a number of from 0 to 10, with the provision that when t=0, at least one of R or R' must be H such that there are at least two of either primary or secondary amino groups.

7. The polycaprolactone adduct material of Claim 6, wherein said amine is selected from the group consisting of 1, 2-diaminoethane; 1, 3-diaminopropane; 1, 4-diaminobutane; 1, 6-diaminohexane;

diethylene triamine; triethylene tetramine; tetraethylene pentamine; 1, 2-propylene diamine; di-(1, 2-propylene)triamine; di-(1, 3-propylene) triamine; N, N-dimethyl-1, 3-diaminopropane; N, N-di-(2-aminoethyl) ethylene diamine; and N-dodecyl-1, 3-propane diamine.

**8.** The polycaprolactone adduct material according to Claim 5, wherein said amine is selected from the group consisting of alicyclic diamines, imidazolines, morpholines, and N-aminoalkyl piperazines of the general formula:

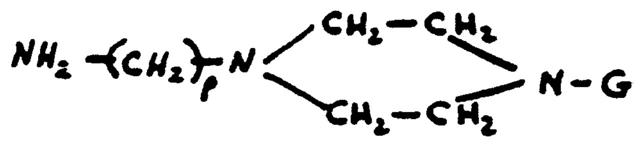

wherein G is independently selected from the group consisting of hydrogen and omega-(non-tertiary)-aminoalkylene radicals of from 1 to 3 carbon atoms, and p is a number of from 1 to 4.

**9.** The polycaprolactone adduct material according to Claim 5, wherein said amine is a mixture of poly (ethyleneamines) averaging 5 to 7 nitrogen atoms per molecule.

**10.** The polycaprolactone adduct material of Claim 5, wherein said amine is a polyoxyalkylene polyamine having the formula:

$$NH_2 - \text{alkylene} - (\text{O-alkylene})_m - NH_2$$

where m has a value of from 3 to 70; or

$$R - [\text{alkylene} - (\text{O-alkylene})_n - NH_2]_a$$

where n has a value of 1 to 40 with the provision that the sum of all the n's is from 3 to 70, R is a substituted saturated hydrocarbon radical of up to 10 carbon atoms, wherein the number of substituents on the R group is represented by the value of "a", which is a number from 3 to 6.

**11.** The polycaprolactone adduct material of Claim 5, wherein said amine is capable of reacting with said hydrocarbyl substituted acid producing material, in a cyclodehydration reaction, said amine having the generalized formula

$NH_2 - Z - NH_2$,

wherein Z is selected from the group consisting of $-CH_2CH_2CH_2-$; $-(CH_2CH_2CH_2NH)_nCH_2CH_2CH_2-$, where n is 1 to 6; and $-(CH_2CH_2CH_2NH)_mCH_2(CH_2)_p(NH-CH_2CH_2CH_2)_{m'}-$, where m and m' are each at least 1, m + m' is from 2 to 5, and p is from 1 to 4.

**12.** The polycaprolactone adduct material of any of claims 1 to 11, which has been post-treated with a complex-forming metal or boron compound.

**13.** An oleaginous composition comprising an oleaginous material selected from the group consisting of fuels and lubricating oil and a poly ($C_5$ - $C_9$ lactone) adduct material prepared by reacting a polyamine with a hydrocarbyl substituted $C_4$ - $C_{10}$ dicarboxylic acid producing material to form a neutralized reaction product having at least one reactive amino group, and then reacting said neutralized reaction product with a $C_5$ - $C_9$ lactone monomer, said hydrocarbyl substituted $C_4$ - $C_{10}$ dicarboxylic acid producing material being formed by reacting an olefin polymer of a $C_2$ - $C_{10}$ monolefin of 700 to 5,000 $M_n$ with a $C_4$ - $C_{10}$ monounsaturated dicarboxylic acid material, wherein there is an average of from 0.7 to 2.0 dicarboxylic acid producing moieties per molecule of said olefin polymer used in the reaction, and wherein said poly ($C_5$ - $C_9$ lactone) adduct material contains the unit $-[C(CH_2)_zO]-_m$, where m is a

number having an average value of from 0.2 to 100 and z is 4 to 8, said poly ($C_5$ - $C_9$) lactone adduct material being useful as an oil additive.

**14.** A lubricating oil composition comprising lubricating oil and from 0.01 to 15 wt. % of the poly ($C_5$-$C_9$) lactone adduct material of any one of Claims 1-12.

## Revendications

**1.** Produit de polyaddition de lactone en $C_5$ à $C_9$ d'une matière productrice d'acide dicarboxylique en $C_4$ à $C_{10}$, à substitution hydrocarbyle, aminée, utile comme additif d'huile et formé par réaction d'une lactone en $C_5$ à $C_9$, d'une amine et d'une matière productrice d'acide dicarboxylique en $C_4$ à $C_{10}$ à substitution hydrocarbyle, ladite matière productrice d'acide dicarboxylique en $C_4$ à $C_{10}$ à substitution hydrocarbyle étant formée par réaction d'un polymère oléfinique d'une monooléfine en $C_2$ à $C_{10}$ ayant une moyenne numérique du poids moléculaire de 700 à 5000 et d'une matière productrice d'acide dicarboxylique monoinsaturé en $C_4$ à $C_{10}$, dans lequel il existe un nombre moyen de 0,7 à 2,0 groupements producteurs d'acide dicarboxylique par molécule dudit polymère oléfinique utilisé dans la réaction, ledit produit de polyaddition d'une lactone en $C_5$ à $C_9$ contenant le motif

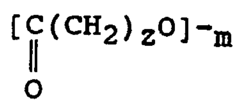

dans lequel m a une valeur moyenne de 0,2 à 00 et z a une valeur de 4 à 8, ledit produit de polyaddition de lactone en $C_5$ à $C_9$ étant formé en faisant tout d'abord réagir ladite amine avec ladite matière productrice d'acide dicarboxylique à substitution hydrocarbyle pour former une matière productrice d'acide dicarboxylique à substitution hydrocarbyle, neutralisée, et ayant un groupe amino fonctionnel capable de déclencher la polymérisation par ouverture du noyau lactone, puis en faisant réagir ladite lactone avec ladite matière productrice d'acide dicarboxylique à substitution hydrocarbyle neutralisée.

**2.** Produit de polyaddition de lactone en $C_5$ à $C_9$ suivant la revendication 1, dans lequel la lactone en $C_5$ à $C_9$ est la E-caprolactone.

**3.** Produit de polyaddition de caprolactone suivant la revendication 1 ou la revendication 2, dans lequel la matière productrice d'acide dicarboxylique en $C_4$ à $C_{10}$ est l'anhydride maléique.

**4.** Produit de polyaddition de caprolactone suivant l'une quelconque des revendications 1 à 3, dans lequel le polymère oléfinique est le polyisobutylène.

**5.** Produit de polyaddition de caprolactone suivant l'une quelconque des revendications 1 à 4, dans lequel l'amine est choisie dans le groupe comprenant des polyamines ayant un nombre total d'atomes de carbone de 2 à 60 et un nombre d'atomes d'azote de 2 à 12 dans la molécule.

**6.** Produit de polyaddition de caprolactone suivant la revendication 5, dans lequel l'amine est une amine à saturation aliphatique répondant à la formule

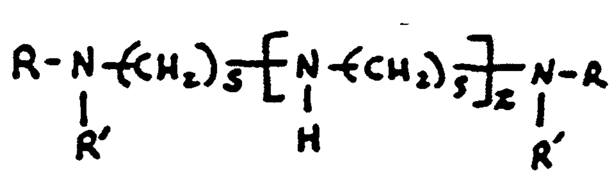

dans laquelle R et R' sont choisis indépendamment dans le groupe comprenant l'hydrogène, des radicaux alkyle en $C_1$ à $C_{25}$ à chaîne droite ou ramifiée, des radicaux (alkoxy en $C_1$ à $C_{12}$)-(alkylène en $C_2$ à $C_6$) et des radicaux (alkylamino en $C_1$ à $C_{12}$)-(alkylène en $C_2$ à $C_6$) ; les indices s sont identiques ou différents et représentent chacun un nombre de 2 à 6, et t représente un nombre de 0 à 10, sous

réserve que lorsque t est égal à 0, au moins l'un des groupes R et R' représente H, de sorte qu'il existe au moins deux groupes amino primaires ou secondaires.

7. Produit de polyaddition de caprolactone suivant la revendication 6, dans lequel l'amine est choisie dans le groupe comprenant le 1,2-diaminoéthane ; le 1,3-diaminopropane ; le 1,4-diaminobutane ; le 1,6-diaminohexane ; la diéthylène-triamine ; la triéthylène-tétramine ; la tétraéthylène-pentamine ; la 1,2-propylène-diamine ; la di-1,2-propylène-triamine ; la di-1,3-propylène-triamine ; le N,N-diméthyl-1,3-diamino-propane ; la N,N-di-(2-aminoéthyl)-éthylène-diamine et la N-dodécyl-1,3-propane-diamine.

8. Produit de polyaddition de caprolactone suivant la revendication 5, dans lequel l'amine est choisie dans le groupe comprenant des diamines alicycliques, des imidozalines, des morpholines et des N-aminoalkyl-pipérazines de formule générale

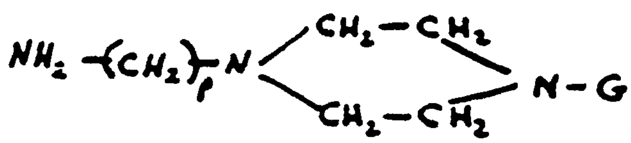

dans laquelle G est choisi indépendamment dans le groupe comprenant l'hydrogène et des radicaux oméga (non-tertio)-aminoalkylènes de 1 à 3 atomes de carbone, et p est un nombre de 1 à 4.

9. Produit de polyaddition de caprolactone suivant la revendication 5, dans lequel l'amine est un mélange de poly(éthylène-amines) ayant un nombre moyen de 5 à 7 atomes d'azote par molécule.

10. Produit de polyaddition de caprolactone suivant la revendication 5, dans lequel l'amine est une polyoxyalkylène-polyamine répondant à la formule :

$$NH_2 - \text{alkylène} -(\text{O-alkylène})_m - NH_2$$

dans laquelle m a une valeur de 3 à 70 ; ou

$$R -[\text{alkylène} -(\text{O-alkylène})_n - NH_2]_a$$

dans laquelle n a une valeur de 1 à 40, sous réserve que la somme de tous les indices n possède une valeur de 3 à 70, R représente un radical hydrocarboné saturé substitué ayant jusqu'à 10 atomes de carbone, dans lequel le nombre de susbtituants sur le groupe R est représenté par la valeur de "a", qui est un nombre de 3 à 6.

11. Produit de polyaddition de caprolactone suivant la revendication 5, dans lequel l'amine est capable de réagir avec ladite matière productrice d'acide à substitution hydrocarbyle, dans une réaction de cyclodéshydratation, ladite amine répondant à la formule généralisée

$NH_2\text{-}Z\text{-}NH_2$

dans laquelle Z est choisi entre les groupes $-CH_2CH_2CH_2-$ ; $-(CH_2CH_2CH_2NH)_nCH_2CH_2CH_2-$, dans lequel n a une valeur de 1 à 6 ; et $-(CH_2CH_2CH_2NH)_mCH_2(CH_2)_p(NH\text{-}CH_2CH_2CH_2)_{m'}-$, dans lequel m et m' possèdent chacun une valeur au moins égale à 1, la somme m + m' a une valeur de 2 à 5 et p a une valeur de 1 à 4.

12. Produit de polyaddition de caprolactone suivant l'une quelconque des revendications 1 à 11, qui a été soumis à un post-traitement avec un métal formant un complexe ou un composé de bore.

**13.** Composition d'huile renfermant une huile, choisie dans le groupe comprenant les combustibles et une huile lubrifiante, et un produit de polyaddition d'une lactone en $C_5$ à $C_9$ préparé par réaction d'une polyamine avec une matière productrice d'acide dicarboxylique en $C_4$ à $C_{10}$ à substitution hydrocarbyle pour former un produit de réaction neutralisé ayant au moins un groupe amino réactif, puis par réaction dudit produit de réaction neutralisé avec un monomère lactone en $C_5$ à $C_9$, ladite matière productrice d'acide dicarboxylique en $C_4$ à $C_{10}$ à substitution hydrocarbyle étant formée par réaction d'un polymère oléfinique d'une monooléfine en $C_2$ à $C_{10}$ ayant une valeur de $M_n$ de 700 à 5000 avec une matière du type acide dicarboxylique monoinsaturé en $C_4$ à $C_{10}$, dans laquelle il existe un nombre moyen de 0,7 à 2,0 groupements producteurs d'acide dicarboxylique par molécule dudit polymère oléfinique utilisé dans la réaction, et dans laquelle le produit de polyaddition de lactone en $C_5$ à $C_9$ contient le motif $[C(CH_2)_zO]$-$_m$ dans lequel m représente un nombre ayant une valeur moyenne de 0,2 à 100 et z a une valeur de 4 à 8, le produit de polyaddition de lactone en $C_5$ à $C_9$ étant utile comme additif d'huile.

**14.** Composition d'huile lubrifiante comprenant une huile lubrifiante et 0,01 à 15 % en poids du produit de polyaddition de lactone en $C_5$ à $C_9$ suivant l'une quelconque des revendications 1 à 12.

### Ansprüche

**1.** Poly($C_5$-$C_9$-lacton)addukt eines aminierte, kohlenwasserstoffsubstituierte $C_4$-$C_{10}$-Dicarbonsäure produzierenden Materials, das als Öladditiv brauchbar ist und gebildet wird, indem ein $C_5$-$C_9$-Lacton, ein Amin und ein kohlenwasserstoffsubstituierte $C_4$-$C_{10}$-Dicarbonsäure produzierendes Material umgesetzt werden, wobei das kohlenwasserstoffsubstituierte $C_4$-$C_{10}$-Dicarbonsäure produzierende Material durch Umsetzen eines Olefinpolymeren eines $C_2$-$C_{10}$-Monoolefins, das ein durchschnittliches zahlenmäßiges Molekulargewicht von 700 bis 5000 hat, mit einem monoungesättigten $C_4$-$C_{10}$-Dicarbonsäuremittel gebildet worden ist, wobei im Durchschnitt 0,7 bis 2,0 Dicarbonsäure produzierende Reste pro Molekül des bei der Reaktion verwendeten Olefinpolymeren vorhanden sind, wobei das Poly($C_5$-$C_9$-lacton)-addukt die Einheit

$$-[\underset{\underset{O}{\|}}{C}(CH_2)_zO]_m-$$

enthält, worin m einen durchschnittlichen Wert von 0,2 bis 100 hat und z 4 bis 8 ist und das Poly($C_5$-$C_9$-lacton)addukt gebildet wird, indem zuerst das Amin mit dem kohlenwasserstoffsubstituierte Dicarbonsäure produzierenden Material zur Bildung eines neutralisierten kohlenwasserstoffsubstituierte Dicarbonsäure produzierenden Materials mit einer funktionellen Aminogruppe, die in der Lage ist, die lactonringöffnende Polymerisation zu starten, und anschließend das Lacton mit dem neutralisierten kohlenwasserstoffsubstituierte Dicarbonsäure produzierenden Material umgesetzt wird.

**2.** Poly($C_5$-$C_9$-lacton)addukt nach Anspruch 1, bei dem das $C_5$-$C_9$-Lacton E-Caprolacton ist.

**3.** Polycaprolactonaddukt nach Anspruch 1 oder 2, bei dem das $C_4$-$C_{10}$-Dicarbonsäure produzierende Material Maleinsäureanhydrid ist.

**4.** Polycaprolactonaddukt nach einem der Ansprüche 1 bis 3, bei dem das Olefinpolymer Polyisobutylen ist.

**5.** Polycaprolactonaddukt nach einem der Ansprüche 1 bis 4, bei dem das Amin aus der Gruppe bestehend aus Polyaminen mit insgesamt 2 bis 60 Kohlenstoffatomen und 2 bis 12 Stickstoffatomen pro Molekül ausgewählt ist.

**6.** Polycaprolactonaddukt nach Anspruch 5, bei dem das Amin ein aliphatisches, gesättigtes Amin mit der Formel

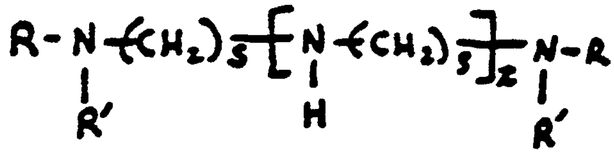

ist, worin R und R' unabhängig aus der Gruppe bestehend aus Wasserstoff, geradkettigen oder verzweigten $C_1$-$C_{25}$-Alkylresten, $C_1$-$C_{12}$-Alkoxy-$C_2$-$C_6$-Alkylenresten und $C_1$-$C_{12}$-Alkylamino-$C_2$-$C_6$ Alkylenresten ausgewählt sind, jedes s die gleiche oder eine andere Zahl von 2 bis 6 ist und t eine Zahl von 0 bis 10 ist, mit der Maßgabe, daß, wenn $t=0$ ist, mindestens einer der Reste R oder R' gleich H sein muß, so daß mindestens zwei entweder primäre oder sekundäre Aminogruppen vorhanden sind.

**7.** Polycaprolactonaddukt nach Anspruch 6, bei dem das Amin aus der Gruppe bestehend aus 1,2-Diaminoethan, 1,3-Diaminopropan, 1,4-Diaminobutan, 1,6-Diaminohexan, Diethylentriamin, Triethylentetramin, Tetraethylenpentamin, 1,2-Propylendiamin, Di(1,2-propylen)triamin, Di(1,3-propylen)triamin, N,N-Dimethyl-1,3-diaminopropan, N,N-Di(2-aminoethyl)ethylendiamin und N-Dodecyl-1,3-propandiamin ausgewählt ist.

**8.** Polycaprolactonaddukt nach Anspruch 5, worin das Amin aus der Gruppe bestehend aus alicyclischen Diaminen, Imidazolinen, Morpholinen und N-Aminoalkylpiperazinen mit der allgemeinen Formel:

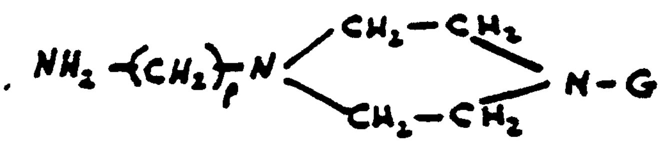

ausgewählt ist, worin G unabhängig aus der Gruppe bestehend aus Wasserstoff und ω-(nicht-tertiären)-Aminoalkylenresten mit 1 bis 3 Kohlenstoffatomen ausgewählt ist und p eine Zahl von 1 bis 4 ist.

**9.** Polycaprolactonaddukt nach Anspruch 5, bei dem das Amin eine Mischung aus Poly(ethylenaminen) mit im Durchschnitt 5 bis 7 Stickstoffatomen pro Molekül ist.

**10.** Polycaprolactonaddukt nach Anspruch 5, worin das Amin ein Polyoxyalkylenpolyamin mit der Formel:

$NH_2$-Alkylen-(0-alkylen)$_m$-$NH_2$

ist, worin m einen Wert von 3 bis 70 hat, oder

R-[Alkylen-(0-alkylen)$_n$-$NH_2$]$_a$

ist, worin n einen Wert von 1 bis 40 mit der Maßgabe hat, daß die Summe aller n gleich 3 bis 70 ist, und R ein substituierter, gesättigter Kohlenwasserstoffrest mit bis zu 10 Kohlenstoffatomen ist, wobei die Zahl der Substituenten der R Gruppe durch den Wert von "a" wiedergegeben wird und a eine Zahl von 3 bis 6 ist.

**11.** Polycaprolactonaddukt nach Anspruch 5, worin das Amin in der Lage ist, mit dem kohlenwasserstoffsubstituierte Säure produzierenden Material in einer Cyclodehydratationsreaktion zu reagieren, wobei das Amin die allgemeine Formel:

$NH_2$ - Z - $NH_2$,

hat, in der Z aus der Gruppe bestehend aus $-CH_2CH_2CH_2-$, $-(CH_2CH_2CH_2NH)_nCH_2CH_2CH_2-$ mit n gleich 1 bis 6 und $-(CH_2CH_2CH_2NH)_mCH_2(CH_2)_p(NH-CH_2CH_2CH_2)_{m'}-$, worin m und m' jeweils mindestens gleich 1 sind, m + m' gleich 2 bis 5 ist und p gleich 1 bis 4 ist, ausgewählt ist.

**12.** Polycaprolactonaddukt nach einem der Ansprüche 1 bis 11, das mit einem komplexbildenden Metall oder einer Borverbindung nachbehandelt worden ist.

**13.** Ölzusammensetzung, die ein öliges Material ausgewählt aus der Gruppe bestehend aus Brennstoffen und Schmierölen und ein Poly($C_5$-$C_9$-lacton)addukt umfaßt, das hergestellt wird, indem ein Polyamin mit einem kohlenwasserstoffsubstituierte $C_4$-$C_{10}$-Dicarbonsäure produzierenden Material zur Bildung eines neutralisierten Reaktionsproduktes mit mindestens einer reaktiven Aminogruppe und dann das neutralisierte Reaktionsprodukt mit einem $C_5$-$C_9$-Lactonmonomer umgesetzt wird, wobei das kohlenwasserstoffsubstituierte $C_4$-$C_{10}$-Dicarbonsäure produzierende Material durch Umsetzen eines Olefinpolymeren aus einem $C_2$-$C_{10}$-Monoolefin, dessen $M_n$ 700 bis 5000 beträgt, mit einem monoungesättigten $C_4$-$C_{10}$Dicarbonsäurematerial gebildet worden ist, wobei im Durchschnitt 0,7 bis 2,0 Dicarbonsäure produzierende Anteile pro Molekül des bei der Reaktion verwendeten Olefinpolymeren vorhanden sind, und wobei das Poly($C_5$-$C_9$-lacton)addukt die Einheit

$$[\underset{\overset{\|}{O}}{C}(CH_2)_zO]_m-$$

enthält, in der m eine Zahl mit einem durchschnittlichen Wert von 0,2 bis 100 ist und z 4 bis 8 ist, und als Öladditiv brauchbar ist.

**14.** Schmierölzusammensetzung, die Schmieröl und 0,01 bis 15 Gew.% des Poly($C_5$-$C_9$-lacton)addukts gemäß einem der Ansprüche 1 bis 12 enthält.